# EUROPÄISCHE PATENTSCHRIFT

(11) **EP 1 056 953 B1**
(45) Veröffentlichungstag und Bekanntmachung des Hinweises auf die Patenterteilung: **28.04.2004**
(21) Anmeldenummer: 99913172.5
(22) Anmeldetag: 18.02.1999
(51) Int. Cl.: F16B 12/14

(54) **VERBINDUNGSMITTEL ZUM LÖSBAREN VERBINDEN UND VERFAHREN ZUM LÖSEN EINER VERBINDUNG EINES ERSTEN BAUTEILS UND EINES ZWEITEN BAUTEILS**
FASTENING MEANS FOR JOINING COMPONENTS SUCH THAT THEY CAN BE DETACHED, AND A METHOD FOR DETACHING A JOINING BETWEEN A FIRST COMPONENT AND A SECOND COMPONENT
ELEMENT D'ASSEMBLAGE POUR ASSEMBLAGES DEMONTABLES ET PROCEDE POUR DESOLIDARISER UN PREMIER ET UN SECOND ELEMENT ASSEMBLES

(30) Priorität: 24.02.1998 DE 19807663
(43) Veröffentlichungstag der Anmeldung: 06.12.2000
(73) Patentinhaber: Haser, Franz, 87534 Oberstaufen (DE); Baur, Franz, 87534 Oberstaufen (DE)
(72) Erfinder: BAUR, Franz, D-87534 Oberstaufen (DE)
(74) Vertreter: Hörner, Andreas
(86) Internationale Anmeldenummer: PCT/EP1999/001064
(87) Internationale Veröffentlichungsnummer: WO 1999/043961

(56) Entgegenhaltungen:
- EP-A- 0 344 120
- DE-A- 4 336 796
- DE-U- 29 620 785

## Beschreibung

Die Erfindung betrifft ein Verbindungsmittel zum lösbaren Verbinden eines ersten Bauteils und eines zweiten Bauteils, insbesondere zum lösbaren Verbinden von Möbel- oder Maschinenteilen, umfassend
ein im verbundenen Zustand der Bauteile an dem ersten Bauteil angeordnetes erstes Verbindungselement und
ein im verbundenen Zustand der Bauteile an dem zweiten Bauteil angeordnetes zweites Verbindungselement,
wobei das erste Verbindungselement und das zweite Verbindungselement im verbundenen Zustand der Bauteile lösbar miteinander verbunden sind und eines der Verbindungselemente ein Halteteil umfaßt, das in einer Haltestellung so mit dem anderen der Verbindungselemente zusammenwirkt, daß eine Relativbewegung des ersten Verbindungselements und des zweiten Verbindungselements längs einer Verbindungsrichtung verhindert wird, und das in einer Freigabestellung eine Relativbewegung des ersten Verbindungselements und des zweiten Verbindungselements längs der Verbindungsrichtung zuläßt.

Ferner betrifft die vorliegende Erfindung ein Verfahren zum Lösen einer Verbindung eines ersten Bauteils, an dem ein erstes Verbindungselement angeordnet ist, und eines zweiten Bauteils, an dem ein zweites Verbindungselement angeordnet ist, wobei eines der Verbindungselemente ein Halteteil umfaßt, das in einer Haltestellung so mit dem anderen der Verbindungselemente zusammenwirkt, daß eine Relativbewegung des ersten Verbindungselements und des zweiten Verbindungselements längs der Verbindungsrichtung verhindert wird, und wobei das Halteteil zum Lösen der Verbindung von der Haltestellung in eine Freigabestellung bewegt wird, in der das Halteteil eine Relativbewegung des ersten Verbindungselements und des zweiten Verbindungselements längs der Verbindungsrichtung zuläßt.

Solche Verbindungsmittel und Verfahren sind bekannt.

Insbesondere ist es bekannt, zum lösbaren Verbinden von Möbelbauteilen jeweils eine Exzenterscheibe und einen Stehbolzen umfassende Schrankschließen zu benutzen.

Bei den bekannten Verbindungsmitteln ist von Nachteil, daß das Halteteil mittels eines Werkzeuges, das in das Verbindungsmittel eingreift, in die Freigabestellung bewegt wird, so daß ein direkter Zugang zu dem Verbindungsmittel für das Werkzeug vorgesehen werden muß.

Insbesondere im Falle von Schrankschließen, die Exzenterscheiben und Stehbolzen umfassen, werden die miteinander zu verbindenden Bauteile durch die erforderlichen, sich kreuzenden Bohrungen in diesen Bauteilen derart geschwächt, daß bei kleinster Überlastung, unter Umständen sogar bei normalem Gebrauch des Möbels, ein Versagen der Verbindung durch Ausbrechen der Verbindungselemente aus dem jeweils zugeordneten Bauteil eintritt. Da die Exzenterscheibe die zu übertragende Zugkraft der Verbindung durch Beanspruchung der Lochwandung des Bauteils, in das die Exzenterscheibe eingesetzt ist, auf Lochleibungsspannung aufnimmt, ist ein Mindestabstand der Exzenterscheibe von einer Anlagefläche, mit der das die Exzenterscheibe aufnehmende Bauteil an dem weiteren Bauteil anliegt, erforderlich, um sicherzustellen, daß die zulässige Grenzschubspannung des Werkstoffs dieses Bauteils nicht überschritten wird. Aufgrund dieses Mindestabstandes muß der Stehbolzen, der im verbundenen Zustand in die Exzenterscheibe eingreift, so lang sein, daß er für ein Herausbrechen aus dem Bauteil, in dem er aufgenommen ist, beim Auftreten eines seitlichen Stoßes anfällig ist. Ferner führt die räumlich variierende Lochleibungsspannung an der Wandung des Loches, in dem die Exzenterscheibe aufgenommen ist, zu einem Kippen der Exzenterscheibe, was zu einem Überstehen der Exzenterscheibe über das Bauteil, in dem sie aufgenommen ist, führen kann.

Ein weiterer Nachteil der bekannten Verbindungsmittel besteht darin, daß diese aufgrund des erforderlichen direkten Zugangs für das Werkzeug auch im verbundenen Zustand der Bauteile stets zumindest teilweise sichtbar bleiben, was den optischen Eindruck des aus diesen Bauteilen gefertigten Möbels oder der aus diesen Bauteilen gefertigten Maschine beeinträchtigt.

Aus der EP 0 344 120 A1 ist ein Verbindungsmittel mit den Merkmalen des Oberbegriffs von Anspruch 1 und ein Verfahren mit den Merkmalen des Oberbegriffs von Anspruch 34 bekannt.

Der vorliegenden Erfindung liegt die Aufgabe zugrunde, ein Verbindungsmittel der eingangs genannten Art zu schaffen, das eine sichere lösbare Verbindung zweier Bauteile miteinander ermöglicht, ohne die beteiligten Bauteile durch Durchdringungen unnötig zu schwächen.

Diese Aufgabe wird durch ein Verbindungsmittel gemäß Anspruch 1 gelöst.

Das erfindungsgemäße Konzept bietet den Vorteil, daß das Halteteil in die Freigabestellung bewegbar ist, ohne daß es eines unmittelbaren mechanischen Eingriffs in das Verbindungsmittel bedarf. Vielmehr wird die Bewegung des Halteteils von außerhalb des Verbindungsmittels angetrieben, ohne daß ein unmittelbarer Kontakt eines entsprechenden Antriebsgerätes mit dem Verbindungsmittel erforderlich ist.

Infolgedessen entfällt die Notwendigkeit, für ein Werkzeug zur mechanischen Betätigung des Halteteils einen direkten Zugang zu dem Verbindungsmittel durch eines der miteinander verbundenen Bauteile vorzusehen. Da somit auf zusätzliche Zugangskanäle oder Zugangsbohrungen verzichtet werden kann, werden die miteinander verbundenen Bauteile nicht unnötig durch zusätzliche Durchdringungen geschwächt.

Ferner stören keine sichtbaren Verbindungselemente oder Abdeckkappen das optische Erscheinungsbild des aus den Bauteilen zusammengesetzten Erzeugnisses, beispielsweise des fertigen Möbels.

Im Bereich des Maschinenbaus können mittels des erfindungsgemäßen Verbindungsmittels Verbindungen realisiert werden, bei denen aus konstruktiven Gründen eine zusätzliche Durchdringung der Bauteiloberflächen vermieden werden muß. Ferner besteht die Möglichkeit, ein weiteres Bauteil auch dann anzuschließen, wenn durch bereits angeschlossene Bauteile keine Möglichkeit mehr zum Anschluß eines weiteren Bauteils mittels eines der bekannten Verbindungsmittel besteht.

Durch den Wegfall der Notwendigkeit sich kreuzender Bohrungen am Rande der zu verbindenden Bauteile werden diese Bauteile weniger geschwächt. Somit wird die Gefahr eines Ausbrechens der Verbindungselemente aus den Bauteilen verringert.

Zur Herstellung der lösbaren Verbindung zwischen den beiden miteinander zu verbindenden Bauteilen ist nicht zwingend ein Antriebsmagnetfeld erforderlich. Vielmehr kann vorgesehen sein, daß das Halteteil beispielsweise durch elastische Kräfte beim Herstellen der Verbindung von der Freigabestellung in die Haltestellung bewegbar ist.

Bei einer bevorzugten Ausgestaltung des erfindungsgemäßen Verbindungsmittels ist jedoch vorgesehen, daß das Halteteil mittels eines Antriebsmagnetfeldes von der Freigabestellung in die Haltestellung bewegbar ist. Hierdurch kann ein unbeabsichtigtes Herstellen der Verbindung zwischen den beiden Bauteilen verhindert werden.

Zur Art der zeitlichen Veränderung des Antriebsmagnetfeldes wurden bislang keine näheren Angaben gemacht.

So ist es beispielsweise möglich, daß das Halteteil mittels eines rotierenden Antriebsmagnetfeldes bewegbar ist. Ein solches rotierendes Antriebsmagnetfeld kann direkt mit einem einen Magneten umfassenden Magnetelement zusammenwirken, um dieses in Bewegung zu versetzen.

Alternativ oder ergänzend hierzu kann auch vorgesehen sein, daß das Halteteil mittels eines Antriebsmagnetfeldes mit zeitlich veränderlicher Amplitude bewegbar ist. Insbesondere kann ein sich zeitlich periodisch veränderndes Wechselmagnetfeld verwendet werden. Mittels eines solchen Antriebsmagnetfeldes ist beispielsweise in dem Verbindungsmittel ein Induktionsstrom erzeugbar, der zum Antreiben der Bewegung des Halteteils in die Freigabestellung verwendet werden kann.

Das Verbindungsmittel umfaßt ein Kupplungsmittel, durch dessen Wechselwirkung mit dem Antriebsmagnetfeld das Halteteil bewegbar ist.

Ein solches Kupplungsmittel kann beispielsweise eine Einrichtung zur Erzeugung eines Induktionsstroms durch Wechselwirkung mit dem Antriebsmagnetfeld umfassen.

Dieser Induktionsstrom kann beispielsweise dazu verwendet werden, ein mit dem Induktionsstrom speisbares Heizelement zu betreiben.

Insbesondere kann in diesem Fall vorgesehen sein, daß das Halteteil ein durch Temperaturänderung verformbares Element, vorzugsweise einen Bimetallstreifen, umfaßt. In diesem Fall ist das Halteteil durch Verformung des durch Temperaturänderung verformbaren Elements von der Haltestellung in die Freigabestellung bewegbar, wenn das Heizelement mit dem durch Wechselwirkung mit dem Antriebsmagnetfeld erzeugten Induktionsstrom gespeist wird.

Alternativ oder ergänzend zu einem Antrieb des Halteteils durch Induktion kann auch vorgesehen sein, daß das Kupplungsmittel ein Magnetelement umfaßt, das mittels des Antriebsmagnetfeldes zu einer Bewegung innerhalb des Verbindungsmittels antreibbar ist. Die Bewegung des Magnetelements kommt dabei durch direkte magnetische Wechselwirkung des Magnetelements mit dem Antriebsmagnetfeld zustande.

Die Bewegung des Halteteils kann in diesem Fall unmittelbar durch Wechselwirkung des Halteteils mit dem Magnetelement antreibbar sein.

Insbesondere kann vorgesehen sein, daß das Magnetelement einen Mitnehmer aufweist, der so mit einem geeigneten Mitnahmeelement des Halteteils zusammenwirkt, daß die mittels des Antriebsmagnetfeldes angetriebene Bewegung des Magnetelements auf das Halteteil übertragbar ist.

Bei einer bevorzugten Ausgestaltung der Erfindung ist vorgesehen, daß das Magnetelement mittels des Antriebsmagnetfeldes zu einer Drehbewegung antreibbar ist. Diese Drehbewegung ist dann auf das Halteteil übertragbar, so daß das Halteteil in die Haltestellung eingedreht werden kann.

Besonders günstig ist es, wenn das Magnetelement zu einer oszillierenden Drehbewegung antreibbar ist. In diesem Fall kann sich das Magnetelement, wenn das Halteteil in einer Blockadestellung festsitzt, von dem Halteteil wegbewegt werden, um anschließend über einen großen Drehwinkel von dem Antriebsmagnetfeld beschleunigt zu werden und einen entsprechend großen Impuls auf das Halteteil übertragen zu können, so daß sich das Halteteil aus der Blockadestellung löst. Durch diesen schlaghammer- oder schlagschrauberähnlichen Effekt kann ein beträchtliches Drehmoment auf das Halteteil übertragen werden, so daß auch ein fest in das andere Verbindungsmittel eingedrehtes Halteteil auf diese Weise aus der Haltestellung gelöst werden kann.

Besonders günstig ist es, wenn der von dem Magnetelement bei der oszillierenden Drehbewegung überstreichbare Drehwinkel mehr als ungefähr 90°, vorzugsweise mehr als ungefähr 150° beträgt. Je größer der bei der Drehbewegung überstreichbare Drehwinkel des Magnetelements ist, um so länger ist der Beschleunigungsweg für das Magnetelement und um so höher der von dem Magnetelement auf das Halteteil übertragbare Impuls.

Bei einer bevorzugten Ausgestaltung der Erfindung wird ein Magnetelement verwendet, das einen quer zur Längsachse des Magnetelements magnetisierten Permanentmagneten umfaßt. Ein solches Magnetelement kann in einfacher Weise durch Wechselwirkung mit einem rotierenden Antriebsmagnetfeld zu einer Drehbewegung um seine Längsachse angetrieben werden, die in dem Verbindungsmittel weniger Raum beansprucht als dies bei einer Drehung des Magnetelements um eine Querachse desselben der Fall wäre.

Statt einer unmittelbaren Wechselwirkung des Magnetelements mit dem Halteteil kann auch vorgesehen sein, daß das Kupplungsmittel ein Entriegelungselement umfaßt, das durch Wechselwirkung mit dem Magnetelement in eine Entriegelungsstellung bewegbar ist, wobei sich das Halteteil in der Freigabestellung befindet, wenn sich das Entriegelungselement in der Entriegelungsstellung befindet.

Statt zu einer Drehbewegung kann das Magnetelement mittels des Antriebsmagnetfeldes auch zu einer linearen Bewegung antreibbar sein.

Besonders günstig ist es, wenn das Magnetelement zu einer linearen Hin- und Herbewegung antreibbar ist. In diesem Fall kann das Magnetelement, wenn das Halteteil und/oder ein gegebenenfalls vorhandenes Entriegelungselement sich in einer Blockadestellung befinden, sich von dem Halteteil bzw. dem Entriegelungselement lösen, um erneut von dem Antriebsmagnetfeld beschleunigt zu werden und einen hinreichend großen Impuls zu erhalten, der dazu ausreicht, das Halteteil und/oder das Entriegelungselement aus der Blockadestellung zu lösen.

Zum Antreiben einer linearen Bewegung des Magnetelements ist es von Vorteil, wenn das Magnetelement einen im wesentlichen parallel zur Längsachse des Magnetelements magnetisierten Permanentmagneten umfaßt.

Ferner ist es von Vorteil, wenn das Kupplungsmittel ein elastisches Element zum Umkehren der Bewegungsrichtung des Magnetelements umfaßt. Ein solches elastisches Element kann während des Umkehrvorgangs die kinetische Energie des Magnetelements als elastische Energie speichern und diese Energie nach vollzogener Umkehr der Bewegungsrichtung wieder an das Magnetelement abgeben, um dieses zusätzlich zu beschleunigen.

Bei einer bevorzugten Ausgestaltung des erfindungsgemäßen Verbindungsmittels ist vorgesehen, daß das Halteteil eine Welle mit einem Gewinde, vorzugsweise einem Außengewinde, umfaßt. Wird das Halteteil mittels eines Gewindes in ein entsprechendes Gegengewinde des anderen Verbindungselements eingeschraubt, so können große Zugkräfte von dem Verbindungsmittel aufgenommen werden, was es erlaubt, die Flächen, an denen die miteinander zu verbindenden Bauteile aneinander anliegen, fest aneinanderzuziehen, so daß kein Spalt zwischen den Bauteilen verbleibt.

Bei den bekannten Verbindungsmitteln, insbesondere bei einer Exzenterscheibe und einen Stehbolzen umfassenden Verbindungsmitteln, ist dies meist nicht möglich, weil der durch die sich kreuzenden Bohrungen geschwächte Bereich des Randes des die Exzenterscheibe enthaltenden Bauteils nicht dazu in der Lage ist, die notwendigen Reaktionsspannungen zu aktivieren, ohne sich dabei stark zu verformen. Dies führt dazu, daß der geschwächte Randbereich versagt, bevor die Anlageflächen der miteinander zu verbindenden Bauteile sich berühren.

Alternativ oder ergänzend zu einem Gewinde kann das Halteteil mit einer Rastzunge versehen sein, die in der Haltestellung des Halteteils mit dem anderen Verbindungselement verrastet ist.

Um die miteinander zu verbindenden Bauteile schon vor der Bewegung des Halteteils in die Haltestellung miteinander zur Anlage bringen zu können, ist das Halteteil vorzugsweise längs der Verbindungsrichtung verschieblich in einem der Verbindungselemente gelagert.

Besonders günstig ist es, wenn das Halteteil federnd in einem der Verbindungselemente gelagert ist. Dadurch kann zugleich eine Beschädigung des Halteteils beim Zusammenführen der beiden Bauteile vor dem Herstellen der Verbindung vermieden und das Halteteil gegen das andere Verbindungselement vorgespannt werden, was die Bewegung des Halteteils in die Haltestellung erleichtert.

Um das Verbindungsmittel nach Herstellung der Verbindung zwischen den Bauteilen nicht sichtbar werden zu lassen und das Entstehen eines unschönen Spalts zwischen den Bauteilen in der verbundenen Stellung zu verhindern, ist es von Vorteil, wenn die Verbindungselemente so in dem ersten Bauteil bzw. in dem zweiten Bauteil festlegbar sind, daß Außenflächen dieser Bauteile in der verbundenen Stellung aneinander anliegen.

Insbesondere kann vorgesehen sein, daß eines der Verbindungselemente oder beide Verbindungselemente mittels jeweils eines Außengewindes in dem zugehörigen Bauteil verankerbar sind. In diesem Fall ist in dem montierten Zustand, in dem die Verbindungselemente in dem zugehörigen Bauteil festgelegt sind, für eine sich über viele Gewindeflanken erstreckende Kraftübertragung zwischen dem jeweiligen Verbindungselement und dem zugehörigen Bauteil gesorgt, so daß das Auftreten lokaler Spitzenspannungen, welche die zulässigen Werkstoffkenngrößen des jeweiligen Bauteils überschreiten, vermieden wird.

Eine Sichtbarkeit des Verbindungsmittels im verbundenen Zustand der Bauteile kann insbesondere dadurch vermieden werden, daß eines der Verbindungselemente eine Aufnahme aufweist, in die das andere Verbindungselement in der verbundenen Stellung zumindest teilweise eintaucht.

Ist vorteilhafterweise vorgesehen, daß das andere Verbindungselement in der verbundenen Stellung flächig an einer Innenwand der Aufnahme anliegt, wobei die Oberflächennormale der Innenwand quer zu der Verbindungsrichtung ausgerichtet ist, so kann die mittels des erfindungsgemäßen Verbindungsmittels hergestellte Verbindung zwischen den Bauteilen große Scherkräfte aufnehmen.

Bekannte Verbindungsmittel, insbesondere eine Exzenterscheibe und einen Stehbolzen umfassende Verbindungsmittel, sind dazu nicht in der Lage, weil die erforderlichen sich kreuzenden Bohrungen zumindest eines der Bauteile zu stark schwächen, so daß für die Übertragung von Scherkräften zusätzliche Dübel erforderlich sind, was einen Mehraufwand an Zeit und Kosten für die Herstellung der Verbindung bedingt.

Bei bevorzugten Ausgestaltungen der Erfindung ist vorgesehen, daß mindestens eines der Verbindungselemente einen Verankerungsteil, der im montierten Zustand in dem zugehörigen Bauteil verankert ist, und einen Verbindungsteil, der über eine Außenfläche des zugehörigen Bauteils vorsteht, umfaßt, und daß der Verbindungsteil in der Verbindungsrichtung eine geringere Ausdehnung aufweist als der Verankerungsteil. Durch diese Ausgestaltung wird das in dem zugehörigen Bauteil verankerte Verbindungselement unempfindlich gegenüber seitlichen Stößen. Solche seitlichen Stöße kommen beispielsweise beim Montieren eines Möbelstücks häufig vor, wenn ein Möbelbauteil mit darin eingeschraubten Stehbolzen aufgrund von Unachtsamkeit umfällt und dabei auf einen dieser Stehbolzen fällt. Bei den bekannten Verbindungsmitteln, die, wie vorstehend bereits ausgeführt, notwendigerweise weit über die Außenfläche des zugehörigen Bauteils überstehende Stehbolzen umfassen, führt ein solcher Stoß häufig zum Ausbrechen der Stehbolzen aus dem zugehörigen Bauteil.

Zur Art der Erzeugung des Antriebsmagnetfelds wurden bislang noch keine näheren Angaben gemacht.

Anspruch 26 betrifft ein Antriebsgerät zum Lösen einer mittels eines erfindungsgemäßen Verbindungsmittels hergestellten Verbindung des ersten Bauteils und des zweiten Bauteils, das eine Einrichtung zum Erzeugen des zeitlich veränderlichen Antriebsmagnetfeldes, mittels dessen das Halteteil von der Haltestellung in die Freigabestellung bewegbar ist, umfaßt.

Vorzugsweise ist ein solches Antriebsgerät transportabel ausgebildet, um in einfacher Weise an den jeweiligen Montageort der beiden Bauteile gebracht und in geeigneter Weise relativ zu dem Verbindungsmittel positioniert zu werden.

Die Handhabbarkeit des Antriebsgeräts wird erleichtert, wenn dieses vorteilhafterweise mit einem Handgriff versehen ist.

Um ein in dem Verbindungsmittel vorgesehenes Magnetelement zu einer Bewegung in dem Verbindungsmittel antreiben zu können, umfaßt das Antriebsgerät vorteilhafterweise eine Einrichtung zum Erzeugen eines rotierenden Antriebsmagnetfeldes.

Um das Antriebsgerät sowohl zum Herstellen als auch zum Lösen der Verbindung zwischen den Bauteilen einsetzen zu können, ist die Drehrichtung des Antriebsmagnetfeldes vorzugsweise umkehrbar.

Eine besonders einfache Erzeugung eines rotierenden Antriebsmagnetfeldes ist möglich, wenn das Antriebsgerät einen drehbaren Antriebsmagneten und einen Motor zum Antreiben einer Drehbewegung des Antriebsmagneten umfaßt.

Um den für die Drehbewegung des Antriebsmagneten im Antriebsgerät beanspruchten Raum möglichst klein zu halten, ist vorzugsweise vorgesehen, daß der Antriebsmagnet im wesentlichen zylindrisch und quer zu seiner Längsachse magnetisiert ist.

Alternativ oder ergänzend zu einem drehbaren Antriebsmagneten kann auch vorgesehen sein, daß das Antriebsgerät eine Spulenanordnung aufweist, die mehrere, vorzugsweise antiparallel zueinander ausgerichtete, Spulen umfaßt, welche mittels einer geeigneten Steuerschaltung so mit zeitlich veränderlichen Spulenströmen speisbar sind, daß das durch Superposition der einzelnen Spulenmagnetfelder entstehende Antriebsmagnetfeld in der gewünschten Weise zeitlich veränderlich ist, insbesondere im wesentlichen eine lineare oder eine Drehbewegung ausführt.

Bei einer bevorzugten Ausgestaltung des erfindungsgemäßen Antriebsgeräts ist vorgesehen, daß mittels der Einrichtung zum Erzeugen des Antriebsmagnetfeldes ein periodisch veränderliches Antriebsmagnetfeld erzeugbar ist, dessen Frequenz im wesentlichen einer Resonanzfrequenz eines Kupplungsmittels des Verbindungsmittels entspricht, durch dessen Wechselwirkung mit dem Antriebsmagnetfeld das Halteteil bewegbar ist. Unter der Resonanzfrequenz des Kupplungsmittels wird dabei diejenige Frequenz einer mittels des Antriebsmagnetfeldes angetriebenen oszillierenden Bewegung des Kupplungsmittels verstanden, bei der der von dem Antriebsmagnetfeld auf das Kupplungsmittel übertragene Impuls maximal wird.

Dadurch ist es möglich, das Halteteil auf seinem Weg von der Haltestellung in die Freigabestellung in besonders effizienter Weise aus Blockadestellungen, in denen das Halteteil festsitzt, zu lösen.

Um zu vermeiden, daß das Halteteil beim Herstellen der Verbindung zwischen den Bauteilen in eine Haltestellung gebracht wird, in der es so fest verankert ist, daß es mittels des Antriebsgeräts nicht mehr aus der Haltestellung gelöst werden kann, ist das Antriebsgerät vorzugsweise in einen Betriebszustand schaltbar, in dem die Frequenz des Antriebsmagnetfeldes gegenüber der Resonanzfrequenz des Kupplungsmittels, vorzugsweise um höchstens ungefähr 10 %, verschoben ist. Dieser Betriebszustand des Antriebsgeräts kann dazu verwendet werden, das Halteteil von der Freigabestellung in die Haltestellung zu bringen. Da in diesem Betriebszustand der auf das Kupplungsmittel und damit auf das Halteteil übertragene Impuls kleiner ist als der maximal übertragbare Impuls, ist gewährleistet, daß eine mittels des Antriebsgeräts hergestellte Verbindung durch dasselbe Antriebsgerät sicher wieder gelöst werden kann.

Anspruch 33 betrifft ein Montageset zum Herstellen einer lösbaren Verbindung zwischen einem ersten Bauteil und einem zweiten Bauteil, das ein erfindungsgemäßes Verbindungsmittel und ein erfindungsgemäßes Antriebsgerät umfaßt.

Der vorliegenden Erfindung liegt die weitere Aufgabe zugrunde, ein Verfahren zum Lösen einer Verbindung zwischen zwei Bauteilen der eingangs genannten Art zu schaffen, durch das die Bauteile voneinander gelöst werden können, ohne daß die beteiligten Bauteile durch Durchdringungen unnötig geschwächt werden müssen.

Diese Aufgabe wird bei einem Verfahren mit den Merkmalen des Oberbegriffs von Anspruch 34 erfindungsgemäß dadurch gelöst, daß das Halteteil mittels eines von außerhalb des Verbindungsmittels auf das Verbindungsmittel einwirkenden zeitlich veränderlichen Antriebsmagnetfeldes von der Haltestellung in die Freigabestellung bewegt wird.

Das erfindungsgemäße Verfahren bietet den Vorteil, daß in den beteiligten Bauteilen keine zusätzlichen Durchdringungen vorgesehen werden müssen, um einen unmittelbaren mechanischen Eingriff eines Werkzeugs in das Verbindungsmittel zum Lösen der Verbindung zwischen den Bauteilen zu ermöglichen. Außerdem wird es möglich, das Verbindungsmittel im verbundenen Zustand unsichtbar an den miteinander verbundenen Bauteilen anzuordnen.

Besondere Ausgestaltungen des erfindungsgemäßen Verfahrens sind Gegenstand der abhängigen Ansprüche 35 bis 63, deren Vorteile bereits vorstehend im Zusammenhang mit den besonderen Ausgestaltungen des erfindungsgemäßen Verbindungsmittels und des erfindungsgemäßen Antriebsgeräts erläutert wurden.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: einen schematischen Längsschnitt durch zwei mittels einer ersten Ausführungsform des erfindungsgemäßen Verbindungsmittels lösbar miteinander verbundene Bauteile;
- Fig. 2: eine perspektivische Darstellung einer Außenhülse eines ersten Verbindungselements und eines zweiten Verbindungselements des Verbindungsmittels aus Fig. 1;
- Fig. 3: eine Explosionsdarstellung eines Halteteils und eines Kupplungsmittels, die in der Außenhülse des ersten Verbindungselements aus Fig. 2 angeordnet sind;
- Fig. 4: einen schematischen Längsschnitt ähnlich der Fig. 1, wobei zusätzlich die Lage eines Steuergeräts zum Lösen und Herstellen der Verbindung zwischen den beiden Bauteilen relativ zu dem Verbindungsmittel dargestellt ist;
- Fig. 5: einen schematischen Längsschnitt durch ein Antriebsgerät zum Lösen und Herstellen einer mittels eines erfindungsgemäßen Verbindungsmittels hergestellten Verbindung zweier Bauteile;
- Fig. 6A - 6H: eine Abfolge von schematischen Darstellungen der Positionen eines Antriebsmagneten des Antriebsgeräts aus Fig. 5, eines Magnetelements des Kupplungsmittels aus Fig. 3 und des Halteteils aus Fig. 3 während des Herstellens einer Verbindung zweier Bauteile mittels des Verbindungsmittels aus Fig. 1;
- Fig. 7: einen schematischen Längsschnitt durch zwei Bauteile, die mittels einer zweiten Ausführungsform des erfindungsgemäßen Verbindungsmittels lösbar miteinander verbunden sind, wobei die Lage eines Antriebsgeräts zum Herstellen und Lösen der Verbindung zwischen den Bauteilen relativ zu dem Verbindungsmittel dargestellt ist und sich ein Halteteil des Verbindungsmittels in seiner Haltestellung befindet;
- Fig. 8: eine Darstellung ähnlich der Fig. 7, wobei sich das Halteteil des Verbindungsmittels in seiner Freigabestellung befindet;
- Fig. 9: eine Explosionsdarstellung einer Außenhülse eines ersten Verbindungselements und eines zweiten Verbindungselements des Verbindungsmittels aus den Figuren 7 und 8;
- Fig. 10: eine Explosionsdarstellung eines Kupplungsmittels des ersten Verbindungselements aus Fig. 9;
- Fig. 11: einen schematischen Längsschnitt durch zwei Bauteile, die mittels einer dritten Ausführungsform des erfindungsgemäßen Verbindungsmittels lösbar miteinander verbunden sind,
wobei die Lage eines Antriebsgeräts zum Lösen der Verbindung zwischen den Bauteilen relativ zu dem Verbindungsmittel dargestellt ist, und
- Fig. 12: eine vergrößerte Darstellung des Bereichs I aus Fig. 11.

In allen Figuren sind gleiche oder funktional äquivalente Elemente mit denselben Bezugszeichen bezeichnet.

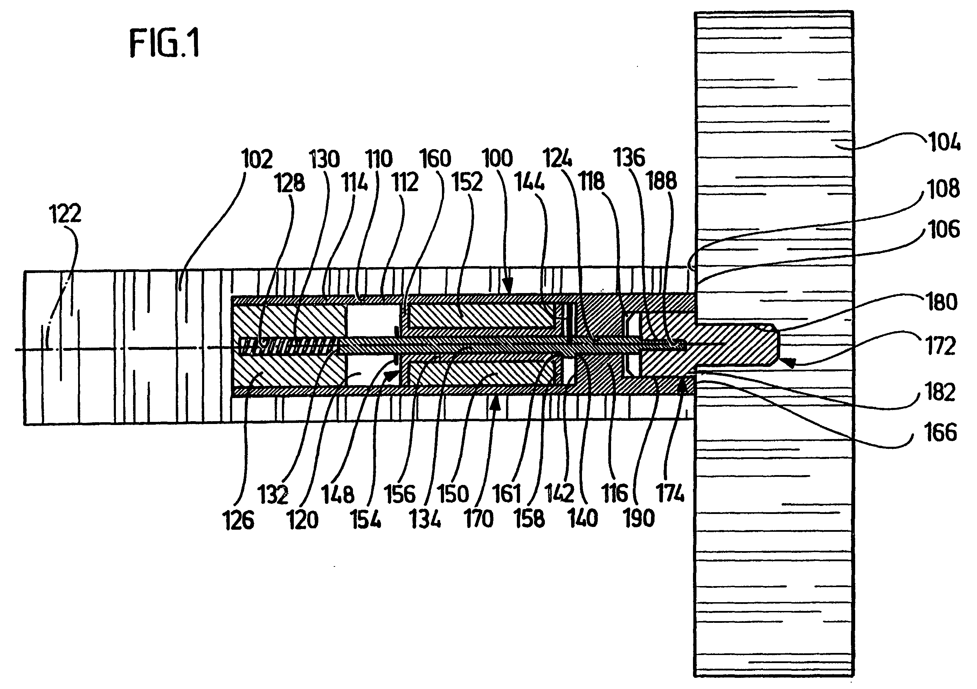

Eine in den Figuren 1 bis 4 dargestellte erste Ausführungsform eines als Ganzes mit 100 bezeichneten Verbindungsmittels wird im folgenden am Beispiel einer Verbindung eines ersten, im wesentlichen plattenförmigen Bauteils 102 mit einem zweiten, ebenfalls im wesentlichen plattenförmigen Bauteil 104 erläutert (siehe Fig. 1).

Die beiden Bauteile 102 und 104 bestehen beispielsweise aus Holz oder Sperrholz, können aber auch aus beliebigen anderen Materialien, beispielsweise aus einem (nicht-ferromagnetischen) Metall oder einem Kunststoffmaterial, bestehen. Ferner kann vorgesehen sein, daß das erste Bauteil 102 und das zweite Bauteil 104 aus voneinander verschiedenen Materialien bestehen.

In dem in Fig. 1 dargestellten verbundenen Zustand der beiden Bauteile 102 und 104 liegt eine eine Schmalseite des ersten Bauteils 102 bildende Anlagefläche 106 des ersten Bauteils 102 an einer Hauptfläche 108 des plattenförmigen zweiten Bauteils 104 an.

Auf die Anlagefläche 106 mündet eine sich in das Innere des ersten Bauteils 102 hinein erstreckende zylindrische Bohrung 110, in die eine hohlzylindrische Außenhülse 112 mittels eines (aus Gründen der Übersichtlichkeit nicht dargestellten) Außengewindes eingeschraubt ist.

Die Außenhülse 112 könnte auch auf andere Weise, beispielsweise durch Preßpassung, in der zylindrischen Bohrung 110 des ersten Bauteils 102 festgelegt sein.

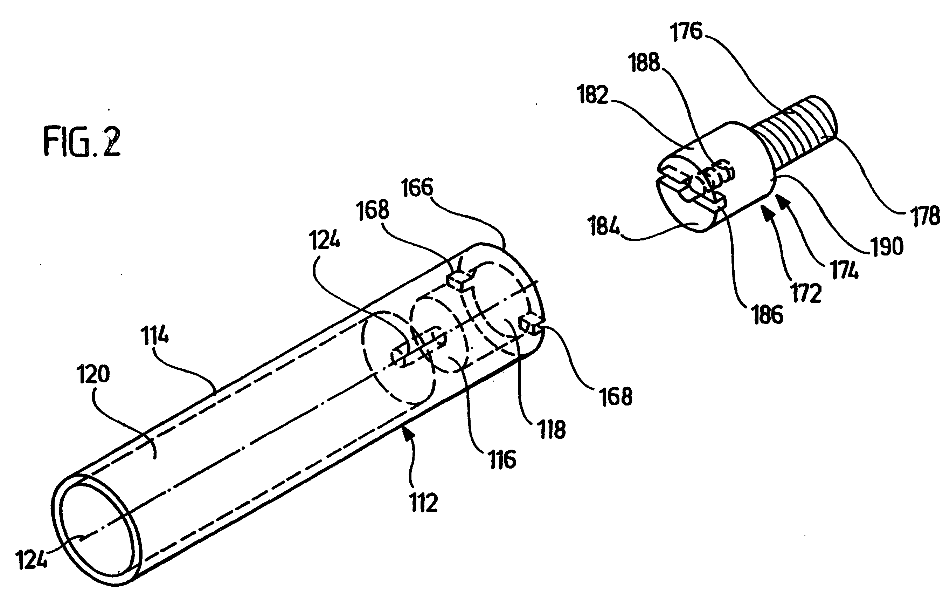

Wie aus den Figuren 1 und 2 zu ersehen ist, weist die hohlzylindrische Außenhülse 112 in ihrer vorderen, d. h. der im montierten Zustand der Anlagefläche 106 zugewandten Hälfte, einen von der Mantelwand 114 der Außenhülse 112 nach innen abstehenden ringförmigen Bund 116 auf, der den Innenraum der Außenhülse 112 in eine vor dem Bund 116 angeordnete Aufnahmekammer 118 und eine hinter dem Bund 116 angeordnete Kopplungskammer 120 unterteilt.

Die Aufnahmekammer 118 und die Kopplungskammer 120 sind durch einen sich längs der Achse 122 der Außenhülse 112 erstreckenden zylindrischen Führungskanal 124 miteinander verbunden.

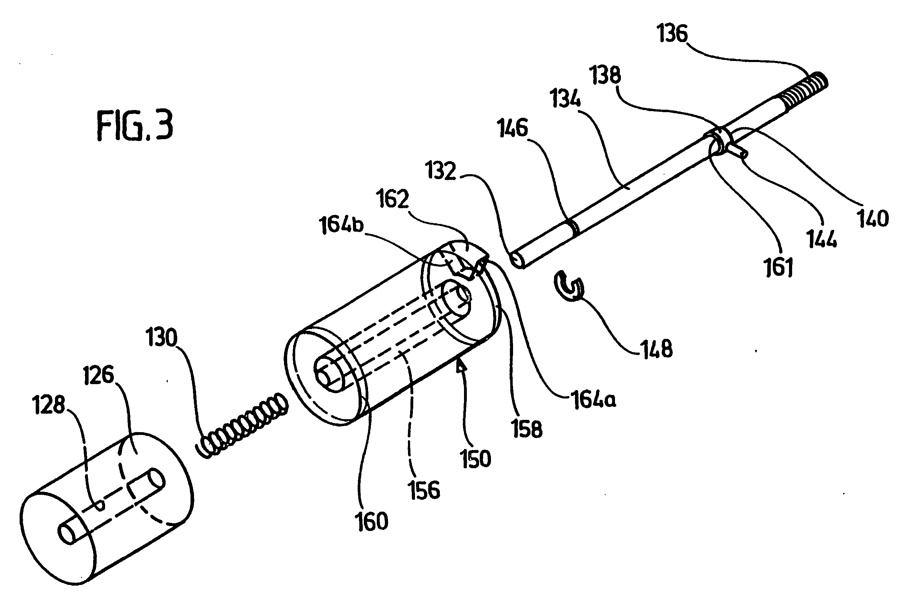

Das der Aufnahmekammer 118 abgewandte Ende der Kopplungskammer 120 ist mittels eines zylindrischen Verschlußstopfens 126 (siehe Fig. 3), der in Preßpassung in der Außenhülse 112 angeordnet ist, verschlossen.

Auf der der Aufnahmekammer 118 zugewandten Vorderseite des Verschlußstopfens 126 mündet ein zylindrisches, koaxial zu der Außenhülse 112 ausgerichtetes Sackloch 128, in dem eine Druck-Schraubenfeder 130 aufgenommen ist, welche sich mit einem Ende an dem Boden des Sackloches 128 abstützt.

Das andere, ebenfalls innerhalb des Sacklochs 128 angeordnete Ende der Druck-Schraubenfeder 130 liegt an einer hinteren Stirnfläche 132 einer zylindrischen Welle 134 an, die koaxial zu der Außenhülse 112 ausgerichtet ist und den Führungskanal 124 durchgreift, so daß die Welle 134 in dem Führungskanal 124 und in dem Sackloch 128 drehbar und in axialer Richtung verschieblich gelagert ist.

Das vordere, in die Aufnahmekammer 118 eintauchende Ende der Welle 134 ist mit einem Außengewinde 136 versehen.

Zwischen dem Außengewinde 136 und der hinteren Stirnfläche 132 ist an der Welle 134 ein ringförmiger Kragen 138 (siehe Fig. 3) ausgebildet, dessen Vorderseite 140 durch die Kraft der Druck-Schraubenfeder 130 gegen die Hinterseite 142 des Bundes 116 gedrückt wird und somit als vorderer Anschlag für die axiale Verschiebung der Welle 134 dient (siehe Fig. 1).

An den Kragen 138 ist ein in radialer Richtung nach außen abstehender, drehfest mit der Welle 134 verbundener Mitnahmezapfen 144 angeformt.

Zwischen dem Kragen 138 und der hinteren Stirnfläche 132 der Welle 134 ist dieselbe längs ihres Umfangs mit einer Ringnut 146 versehen, in die eine Spaltscheibe 148 eingesetzt ist.

Wie am besten aus Fig. 1 zu ersehen ist, ist zwischen dem Kragen 138 und der Spaltscheibe 148 ein im wesentlichen zylindrisches Magnetelement 150 drehbar auf der Welle 134 angeordnet.

Das Magnetelement 150 umfaßt einen hohlzylindrischen Magnetkörper 152, der aus einem im wesentlichen senkrecht zu seiner Längsachse magnetisierten Permanentmagnetmaterial besteht (sogenannte diametrale Magnetisierung).

Zur drehbaren Lagerung des Magnetkörpers 152 auf der Welle 134 ist an demselben eine Kunststoffummantelung 154 angespritzt, welche eine im Innenraum des Magnetkörpers 152 angeordnete hohlzylindrische Buchse 156 sowie eine an der vorderen, d. h. dem Kragen 138 zugewandten Stirnfläche des Magnetkörpers 152 angeordnete vordere Stirnkappe 158 und eine an der hinteren, d. h. der Spaltscheibe 148 zugewandten Stirnfläche des Magnetkörpers 152 angeordnete hintere Stirnkappe 160 umfaßt.

Dabei liegt die Innenwand der Buchse 156 an der Welle 134 an, während die vordere Stirnkappe 158 an einer Rückseite 161 des Kragens 138 anliegt und die hintere Stirnkappe 160 an einer Vorderseite der Spaltscheibe 148 anliegt, so daß das Magnetelement 150 in seiner axialen Lage relativ zu der Welle 134 durch den Kragen 138 und die Spaltscheibe 148 fixiert ist.

Dadurch, daß das Magnetelement 150 auf der Welle 134 und nicht etwa an der Innenwand der Außenhülse 112 drehbar gelagert ist, verringert sich das zur Überwindung der Lagerreibung erforderliche Drehmoment, da die an der Umfangsfläche der Welle 134 auftretenden Reibungskräfte nur mit einem kleinen Hebelarm auf das Magnetelement 150 wirken.

Von der Vorderseite der vorderen Stirnkappe 158 steht nach vorne ein einstückig mit der vorderen Stirnkappe 158 ausgebildeter Mitnehmervorsprung 162 vor, der einen im wesentlichen kreissektorförmigen Querschnitt aufweist und sich längs des Umfangs der vorderen Stirnkappe 158 über einen Winkel von beispielsweise bis zu 60°, vorzugsweise bis zu 30°, erstreckt (siehe Fig. 3).

Radial ausgerichtete seitliche Begrenzungsflächen des Mitnehmervorsprungs 162 bilden Mitnehmerflächen 164a und 164b, die in geeigneter Winkelstellung des Magnetelements 150 relativ zu der Welle 134 so mit dem Mitnahmezapfen 144 der Welle 134 zusammenwirken, daß der Mitnahmezapfen 144 und damit die Welle 134 in der Drehrichtung des Magnetelements 150 von demselben mitgenommen werden. Durch die Mitnehmerflächen 164a, 164b und den Mitnahmezapfen 144 ist also eine Übertragung einer Drehbewegung des Magnetelements 150 auf die Welle 134 möglich.

Die vordere, d.-h. im montierten Zustand in der Anlagefläche 106 des ersten Bauteils 102 liegende vordere Stirnfläche 166 der Außenhülse 112 ist mit einem in radialer Richtung verlaufenden Schlitz 168 versehen, in den ein geeignetes Werkzeug, beispielsweise ein Schraubendreher, zum Eindrehen der Außenhülse 112 in die zylindrische Bohrung 110 des ersten Bauteils 102 eingreifen kann.

Die Außenhülse 112 bildet zusammen mit den darin angeordneten Elementen, nämlich dem Verschlußstopfen 126, der Druck-Schraubenfeder 130, der Welle 134, der Spaltscheibe 148 und dem Magnetelement 150 ein erstes Verbindungselement 170 des Verbindungsmittels 100.

Ein zweites Verbindungselement 172 des Verbindungsmittels 100 wird durch einen Stehbolzen 174 gebildet (siehe Figuren 1 und 2), der einen mit einem Außengewinde 176 versehenen zylindrischen Schaft 178 umfaßt, mit welchem der Stehbolzen 174 im montierten Zustand in eine auf der Hauptfläche 108 des zweiten Bauteils 104 mündende zylindrische Bohrung 180 eingedreht ist.

Ferner umfaßt der Stehbolzen 174 einen im montierten Zustand auf der Hauptfläche 108 des zweiten Bauteils 104 aufliegenden zylindrischen Bolzenkopf 182, der koaxial zu dem Schaft 178 ausgerichtet ist und dessen Durchmesser den Durchmesser des Schaftes 178 übertrifft.

Auch die dem Schaft 178 abgewandte vordere Stirnfläche 184 des Bolzenkopfs 182 ist, wie die vordere Stirnfläche 166 der Außenhülse 112, mit einem in radialer Richtung verlaufenden, durchgehenden Schlitz 186 versehen, in den ein geeignetes Werkzeug, beispielsweise ein Schraubendreher, eingreifen kann, um den Stehbolzen 174 in die zylindrische Bohrung 180 des zweiten Bauteils 104 einzudrehen.

Ferner ist der Bolzenkopf 182 mit einem mittig angeordneten, auf der vorderen Stirnfläche 184 mündenden Gewinde-Sackloch 188 versehen.

Im verbundenen Zustand der beiden Bauteile 102 und 104, der in Fig. 1 dargestellt ist, ist die Welle 134 des ersten Verbindungselements 170 mit ihrem Außengewinde 136 in das Innengewinde des Gewinde-Sacklochs 188 des als zweites Verbindungselement 172 dienenden Stehbolzens 174 eingeschraubt. Diese Schraubverbindung trägt die in der Verbindungsrichtung, d.h. in Richtung der Achse 122, wirkenden Zugkräfte der Verbindung.

Wie aus Fig. 1 zu ersehen ist, taucht der Bolzenkopf 182 des Stehbolzens 174 im verbundenen Zustand vollständig in die Aufnahmekammer 118 der Außenhülse 112 ein, wobei die Mantelfläche 190 des Bolzenkopfs 182 flächig an der Innenwand der Außenhülse 112 anliegt. Durch diesen flächigen Kontakt zwischen dem Bolzenkopf 182 und der Außenhülse 112 werden die Scherkräfte der Verbindung übertragen.

Dadurch, daß der Bolzenkopf 182 eine geringere axiale Ausdehnung als die Aufnahmekammer 118 aufweist, ist gewährleistet, daß der Bolzenkopf 182 vollständig in die Aufnahmekammer 118 eintauchen kann. Dadurch ist das aus den Verbindungselementen 170 und 172 gebildete Verbindungsmittel 100 im verbundenen Zustand der beiden Bauteile 102 und 104 völlig unsichtbar, was den optischen Eindruck des aus den Bauteilen 102 und 104 zusammengesetzten Erzeugnisses, beispielsweise eines Möbels, deutlich verbessert.

Durch die flächige Passung zwischen dem Bolzenkopf 182 und der Außenhülse 112 können sehr große Scherkräfte aufgenommen werden.

Da der den Stehbolzen 174 in dem zweiten Bauteil 104 verankernde Schaft 178 eine größere axiale Ausdehnung aufweist als der über das zweite Bauteil 104 hinausstehende Bolzenkopf 182, wird dabei ein Ausbrechen der zylindrischen Bohrung 180, in der der Stehbolzen 174 festgelegt ist, verhindert.

Zur Herstellung einer lösbaren Verbindung zwischen den Bauteilen 102 und 104 mittels des vorstehend beschriebenen Verbindungsmittels 100 wird wie folgt vorgegangen:

Zunächst wird die zylindrische Bohrung 110 in dem ersten Bauteil 102 mittels eines Bohrgeräts hergestellt und das erste Verbindungselement 170, d. h. die Außenhülse 112 mit den darin angeordneten, vorstehend beschriebenen Elementen, mittels eines in den Schlitz 168 in der vorderen Stirnfläche 166 der Außenhülse 112 eingreifenden Werkzeugs, beispielsweise eines Schraubendrehers, so in die zylindrische Bohrung 110 eingedreht, daß die vordere Stirnfläche 166 der Außenhülse 112 mit der Anlagefläche 106 bündig ist.

Die Außenhülse 112 kann auch weiter in die zylindrische Bohrung 110 eingedreht werden, so daß ihre vordere Stirnfläche 166 etwas hinter der Anlagefläche 106 zurücksteht.

In dem zweiten Bauteil 104 wird mittels eines geeigneten Bohrgeräts die zylindrische Bohrung 180 hergestellt, und der als zweites Verbindungselement 172 dienende Stehbolzen 174 wird mittels eines in den Schlitz 186 im Bolzenkopf 182 eingreifenden Werkzeugs, beispielsweise eines Schraubendrehers, so weit in die zylindrische Bohrung 180 eingedreht, daß der Bolzenkopf 182 auf der Hauptfläche 108 des zweiten Bauteils 104 aufsitzt.

Dann werden die beiden Bauteile 102 und 104 so zusammengeführt, daß der Bolzenkopf 182 vollständig in die Aufnahmekammer 118 der Außenhülse 112 eintaucht und die Anlagefläche 106 des ersten Bauteils 102 an der Hauptfläche 108 des zweiten Bauteils 104 anliegt.

Dabei drückt der äußerste Gang des Innengewindes des Gewinde-Sacklochs 188 in dem Bolzenkopf 182 gegen den äußersten Gang des Außengewindes 136 der Welle 134, so daß die Welle 134 längs der Achse 122 gegen den Widerstand der Druck-Schraubenfeder 130 nach hinten (in der Darstellung der Fig. 1 nach links) verschoben wird. Durch die federnde Lagerung der Welle 134 in dem Sackloch 128 wird dabei eine Beschädigung des Außengewindes 136 der Welle 134 vermieden.

Zur Herstellung der lösbaren Verbindung muß nun das vordere Ende der Welle 134 in das Gewinde-Sackloch 188 des Stehbolzens 174 eingeschraubt werden.

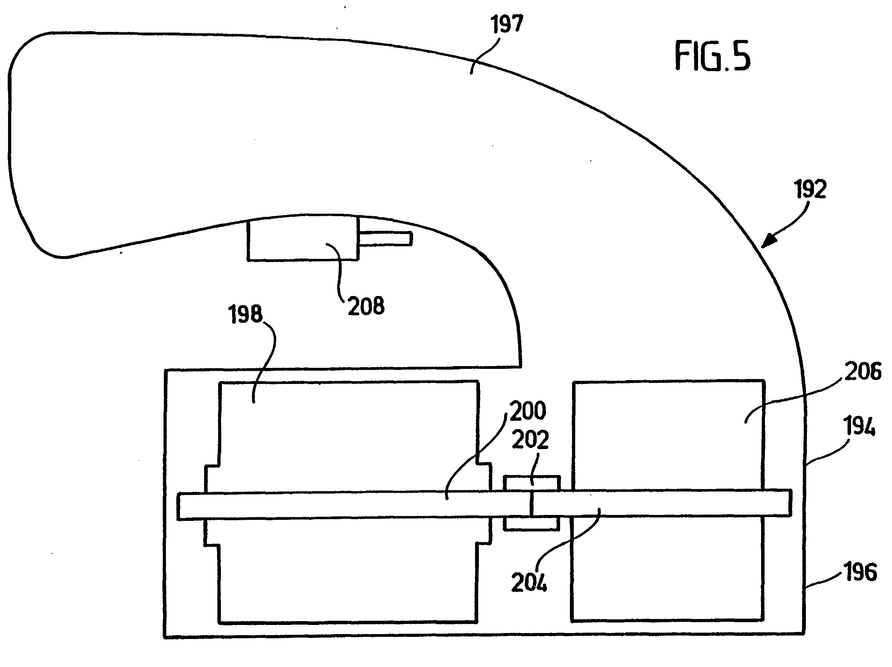

Dieser Einschraubvorgang wird mittels eines in Fig. 5 dargestellten und als Ganzes mit 192 bezeichneten Antriebsgeräts angetrieben, dessen Aufbau im folgenden erläutert wird.

Das Antriebsgerät 192 umfaßt ein Gehäuse 194, beispielsweise aus Kunststoff, mit einer Antriebskammer 196 und einem mit der Antriebskammer 196 verbundenen, griffgünstig geformten Handgriff 197.

In der Antriebskammer 196 des Gehäuses 194 ist ein Elektromotor 198 angeordnet, dessen Antriebswelle 200 mittels eines Kopplungselements 202 drehfest mit einer Welle 204 verbunden ist, auf welcher ein sich mit der Welle 204 mitdrehender Antriebsmagnet 206 angeordnet ist.

Der Antriebsmagnet 206 ist als ein im wesentlichen senkrecht zur Längsrichtung der Welle 204 magnetisierter zylindrischer Hochleistungs-Permanentmagnet ausgebildet (sogenannte diametrale Magnetisierung).

Der Elektromotor 198 ist mittels eines an dem Handgriff 197 angeordneten dreistufigen Wahlschalters 208 außer Betrieb oder wahlweise in einen von zwei möglichen Betriebszuständen schaltbar, von denen ein erster Betriebszustand zum Herstellen einer lösbaren Verbindung und der zweite Betriebszustand zum Lösen einer lösbaren Verbindung dient. Diese beiden Betriebszustände unterscheiden sich durch die Drehrichtung des Elektromotors 198 sowie durch dessen Drehzahl, wie im folgenden noch näher erläutert werden wird.

Die zum Antrieb des Elektromotors 198 erforderliche elektrische Energie wird einem, beispielsweise im Handgriff 197 untergebrachten, Akku entnommen.

Ergänzend oder alternativ hierzu ist es auch möglich, das Antriebsgerät 192 mit einem Netzanschluß zu versehen und die erforderliche elektrische Energie aus einem elektrischen Versorgungsnetz zu beziehen.

Mit Hilfe des vorstehend beschriebenen Antriebsgeräts 192 wird zum Einschrauben der Welle 134 in den Bolzenkopf 182 wie folgt vorgegangen:

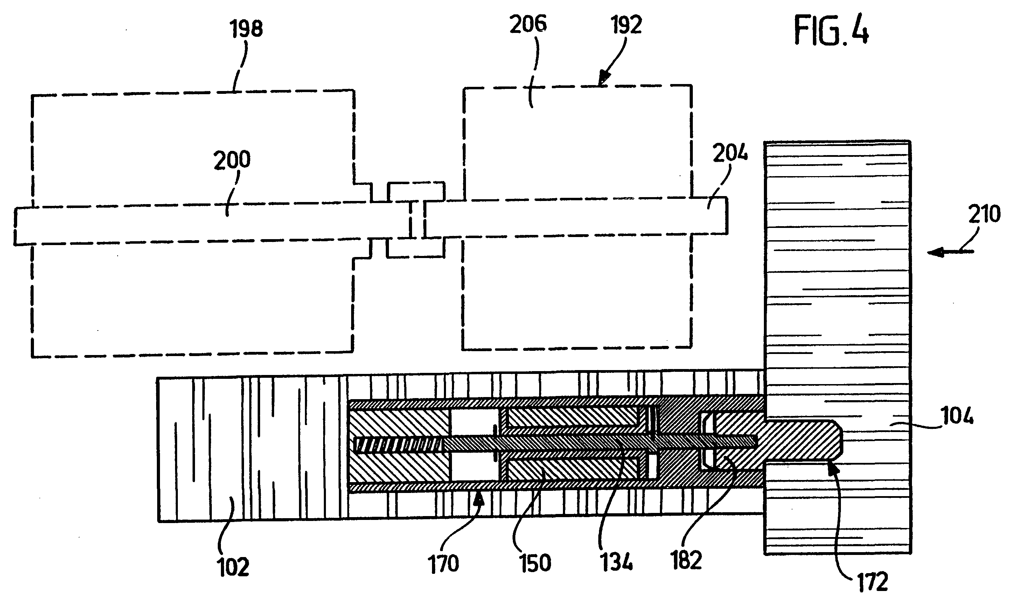

Das Antriebsgerät 192 wird relativ zu dem Verbindungsmittel 100 in eine Stellung gebracht, in der die Welle 204 des Antriebsmagneten 206 und die Welle 134 des ersten Verbindungselements 170 parallel zueinander ausgerichtet sind und der Abstand zwischen dem Antriebsmagneten 206 und dem Magnetelement 150 möglichst gering ist, um eine möglichst starke Wechselwirkung der Magnete miteinander zu erhalten. Die Lage des Elektromotors 198 und des Antriebsmagneten 206 in dieser Stellung sind in Fig. 4 schematisch dargestellt. Das Gehäuse 194 des Antriebsgeräts 192 ist in dieser Darstellung aus Gründen der Übersichtlichkeit weggelassen worden.

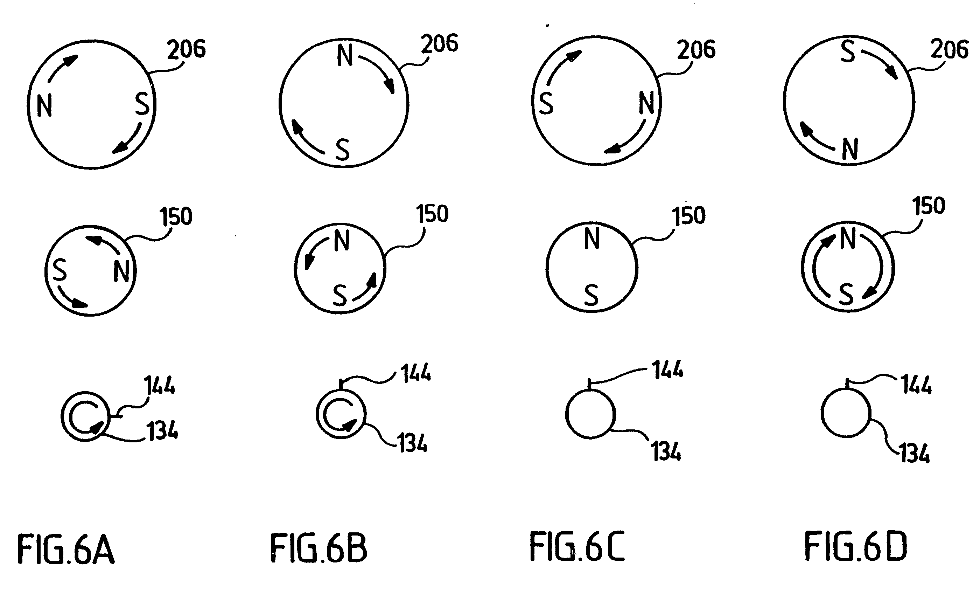

Wird nun durch Betätigung des Wahlschalters 208 der erste Betriebszustand ausgewählt (Herstellen der Verbindung), so dreht sich die Antriebswelle 200 und damit der Antriebsmagnet 206 (bei Betrachtung längs der in Fig. 4 durch den Pfeil 210 angezeigten Blickrichtung) im Uhrzeigersinn. Aufgrund der diametralen Magnetisierung des Antriebsmagneten 206 rotieren dabei der Nordpol (N) und der Südpol (S) des Antriebsmagneten im Uhrzeigersinn, wie dies in der schematischen Darstellung der Fig. 6A zu sehen ist.

Die Drehbewegung des Antriebsmagneten 206 erzeugt somit ein rotierendes Antriebsmagnetfeld.

Damit dieses Antriebsmagnetfeld in den Innenraum der Außenhülse 112 eindringen und mit dem Magnetelement 150 wechselwirken kann, besteht die Außenhülse 112 aus einem nicht-ferromagnetischen Material, beispielsweise aus Messing.

Da sich ungleichnamige Pole des Magnetelements 150 und des Antriebsmagneten 206 anziehen und gleichnamige Pole dieser Elemente einander abstoßen, dreht sich das Magnetelement 150 in der Außenhülse 112 aufgrund der Wechselwirkung mit dem Antriebsmagneten 206 mit entgegengesetzter Drehrichtung, d. h. (in der Blickrichtung 210 betrachtet) im Gegenuhrzeigersinn.

Dabei befindet sich die Mitnehmerfläche 164a des Mitnehmervorsprungs 162 des Magnetelements 150 in Anlage mit dem Mitnahmezapfen 144 der Welle 134, so daß die Welle 134 durch das Magnetelement 150 zu einer Drehbewegung um die Achse 122 mit derselben Drehrichtung wie das Magnetelement 150 angetrieben wird (siehe Figuren 6A und 6B).

Da das Außengewinde 136 der Welle 134 ein Rechtsgewinde ist und die Welle 134 durch die Druck-Schraubenfeder 130 zu dem Bolzenkopf 182 hin vorgespannt wird, wird die Welle 134 durch diese Drehbewegung in das Gewinde-Sackloch 188 des Bolzenkopfs 182 eingeschraubt.

Das Magnetelement 150 und die von diesem mitgenommene Welle 134 folgen der Drehbewegung des Antriebsmagneten 206 so lange, bis der auf die Welle 134 wirkende Widerstand so groß wird, daß das Drehmoment, das von dem durch den Antriebsmagneten 206 erzeugten rotierenden Magnetfeld übertragen wird, nicht mehr ausreicht, die Welle 134 weiterzudrehen. Ist ein solcher Blockadepunkt erreicht, so bleiben die Welle 134 und das Magnetelement 150 in der erreichten Stellung stehen, während sich der Antriebsmagnet 206 weiterdreht (siehe Fig. 6C).

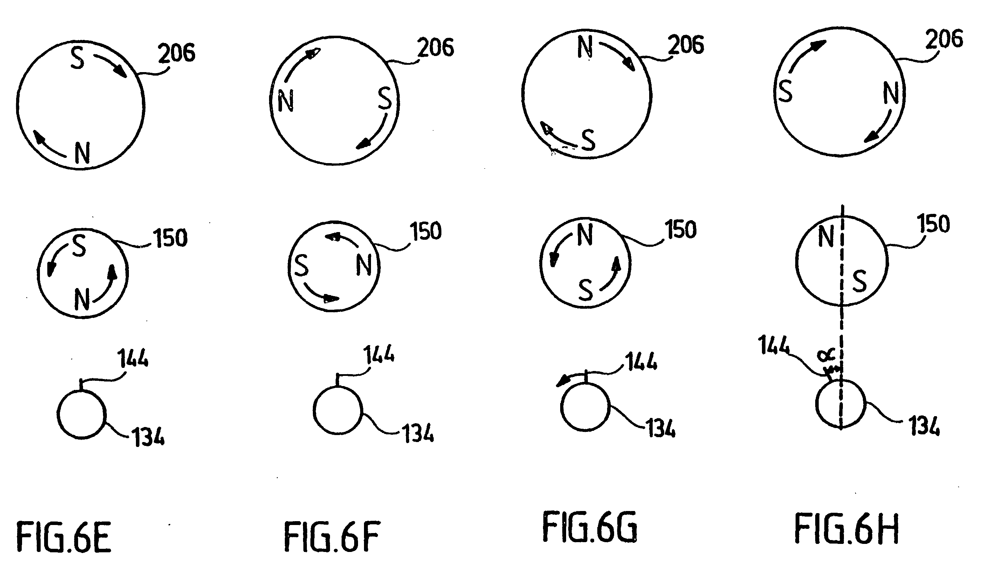

Erst wenn sich der Antriebsmagnet 206 um ungefähr 180° weitergedreht hat, so daß nunmehr gleichnamige Pole des Antriebsmagneten 206 und des Magnetelements 150 einander direkt gegenüberstehen (siehe Fig. 6D), setzt sich das Magnetelement 150 wieder in Bewegung, und zwar in zu der Drehrichtung des Antriebsmagneten 206 gleichsinniger Drehrichtung, bis sich wieder ungleichnamige Pole des Antriebsmagneten 206 und des Magnetelements 150 gegenüberstehen (siehe Fig. 6E).

Ist dieser Zustand erreicht, so dreht sich die Drehrichtung des Magnetelements 150 abermals um, und das Magnetelement 150 dreht sich wieder gegensinnig zu dem Antriebsmagneten 206, wie in der Phase vor Eintreten der Blockade der Welle 134 (siehe Fig. 6F).

Da sich durch den sehr rasch erfolgenden Umklappvorgang (siehe Fig. 6D) der Winkelabstand zwischen dem Mitnahmezapfen 144 und der Mitnehmerfläche 164a auf ungefähr 180° vergrößert hat, wird das Magnetelement 150 über ungefähr eine halbe Umdrehung hinweg von dem rotierenden Magnetfeld des Antriebsmagneten 206 beschleunigt, bis die Mitnehmerfläche 164a erneut an dem Mitnahmezapfen 144 anschlägt und der Impuls des Magnetelements 150 schlagartig auf den Mitnahmezapfen 144 und damit die Welle 134 übertragen wird. Durch diesen großen Impulsübertrag kann sich die Welle 134 aus ihrer Blockadestellung lösen (siehe Fig. 6G) und um einen gewissen Winkel α in eine Stellung weiterdrehen, in der eine erneute Blockade der Welle 134 eintritt (siehe Fig. 6H). In dieser neuen Blockadestellung bleibt auch das Magnetelement 150 wieder stehen, ohne dem Antriebsmagneten 206 weiter folgen zu können, bis sich wieder, wie bereits in Fig. 6D gezeigt, gleichnamige Pole des Magnetelements 150 und des Antriebsmagneten 206 unmittelbar gegenüberstehen und ein erneuter Umklappvorgang des Magnetelements 150 eine erneute Impulsaufnahme ermöglicht.

Auf die vorstehend beschriebene, sich periodisch wiederholende Weise wird die Welle 134 von Blockadestellung zu Blockadestellung weiter in das Innengewinde des Gewinde-Sacklochs 188 hineingetrieben, bis eine ausreichend feste Schraubverbindung zwischen der Welle 134 und dem Bolzenkopf 182 hergestellt ist und der Elektromotor 198 durch Betätigung des Wahlschalters 208 außer Betrieb gesetzt werden kann.

Das wiederholte Schwungholen und Anlaufen des Mitnehmervorsprungs 162 gegen den Mitnahmezapfen 144 erzeugt einen Schlaghammereffekt, der das Eindrehen der Welle 134 in das Gewinde-Sackloch 188 stark beschleunigt.

Die Größe des bei jedem Umlauf des Antriebsmagneten 206 auf das Magnetelement 150 übertragbaren Impulses hängt stark von der Drehfrequenz des Antriebsmagneten 206 ab.

Ist diese Drehfrequenz niedrig, so kann auch die Winkelgeschwindigkeit des Magnetelements 150 nicht allzu groß werden, was den maximal erreichbaren Drehimpuls des Magnetelements 150 beschränkt.

Ist andererseits die Drehfrequenz des Antriebsmagneten 206 zu hoch, so erreicht die Mitnehmerfläche 164a bei dem vorstehend beschriebenen Umklappvorgang nur einen kleinen Winkelabstand von dem Mitnahmezapfen 144, so daß nur ein geringer Drehwinkel zur erneuten Beschleunigung des Magnetelements 150 zur Verfügung steht.

Aus dem Vorstehenden wird deutlich, daß es zwischen den zu niedrigen und den zu hohen Drehfrequenzen des Antriebsmagneten 206 eine bestimmte Frequenz gibt, bei der der pro Umlauf des Antriebsmagneten 206 auf das Magnetelement 150 übertragbare Drehimpuls maximal wird. Diese Frequenz hängt vom Aufbau des Magnetelements 150, insbesondere von dessen Trägheitsmoment, ab und wird im folgenden als Resonanzfrequenz bezeichnet werden.

Zum Herstellen der lösbaren Verbindung zwischen den Bauteilen 102 und 104 wird die Drehfrequenz des Elektromotors 198 und damit des Antriebsmagneten 206 vorzugsweise von der Resonanzfrequenz verschieden gewählt, beispielsweise 5 % bis 10 % größer oder kleiner als die Resonanzfrequenz. Dadurch ist gewährleistet, daß das Anzugsdrehmoment der Welle 134 geringer ist als das maximal mittels des Antriebsgeräts 192 übertragbare Drehmoment.

Ist die Welle 134 in das Gewinde-Sackloch 188 eingeschraubt, so verhindert sie eine Relativbewegung des ersten Verbindungselements 170 und des zweiten Verbindungselements 172 längs der Achse 122. Die Welle 134 dient somit als Halteteil des Verbindungsmittels 100.

Wie vorstehend beschrieben, ist die Welle 134 durch die Wechselwirkung des Magnetelements 150 mit dem von dem Antriebsmagneten 206 erzeugten rotierenden Antriebsmagnetfeld in ihre Haltestellung bewegbar. Das Magnetelement 150 stellt somit ein Kupplungsmittel des Verbindungsmittels 100 dar.

Zum Lösen der Verbindung zwischen den Bauteilen 102 und 104 wird das Antriebsgerät 192 ebenfalls in der vorstehend beschriebenen und in Fig. 4 dargestellten Weise relativ zu dem Verbindungsmittel 100 positioniert.

Anschließend wird der Elektromotor 198 durch Betätigung des Wahlschalters 208 in den zweiten Betriebszustand (Lösen der Verbindung) versetzt, in dem die Antriebswelle 200 und damit der Antriebsmagnet 206 sich (in der Blickrichtung 210 gesehen) im Gegenuhrzeigersinn drehen.

Dadurch wird ein rotierendes Antriebsmagnetfeld erzeugt, das in entsprechender Weise, wie vorstehend unter Bezugnahme auf die Figuren 6A bis 6H beschrieben, ein auf die Welle 134 wirkendes Drehmoment erzeugt. Der einzige Unterschied zum Vorgang der Herstellung der Verbindung besteht darin, daß sich alle Drehrichtungen der beteiligten Elemente umkehren und beim Lösen der Verbindung statt der Mitnehmerfläche 164a die weitere Mitnehmerfläche 164b des Mitnehmervorsprungs 162 in Anlage mit dem Mitnahmezapfen 144 der Welle 134 kommt.

Auf diese Weise wird die Welle 134 von Blockadepunkt zu Blockadepunkt aus dem Innengewinde des Gewinde-Sacklochs 188 herausgedreht, bis der auf die Welle 134 wirkende Widerstand so gering wird, daß sich die Welle 134 frei mit dem Magnetelement 150 mitdrehen und das Magnetelement 150 blockierungsfrei der Drehbewegung des Antriebsmagneten 206 folgen kann.

Damit ist die Freigabestellung der als Halteteil wirkenden Welle 134 erreicht, das Außengewinde 136 der Welle 134 und das Innengewinde des Gewinde-Sacklochs 188 stehen nicht mehr in Eingriff miteinander, und das erste Bauteil 102 und das zweite Bauteil 104 können auseinanderbewegt werden.

In dem zum Lösen der Verbindung verwendeten zweiten Betriebszustand des Antriebsgeräts 192 entspricht die Drehfrequenz der Antriebswelle 200 und damit des Antriebsmagneten 206 möglichst genau der vorstehend definierten Resonanzfrequenz, so daß das auf die Welle 134 übertragbare Drehmoment seinen Maximalwert erreicht und mit Sicherheit größer ist als das beim Herstellen der Verbindung angewandte Anzugsdrehmoment.

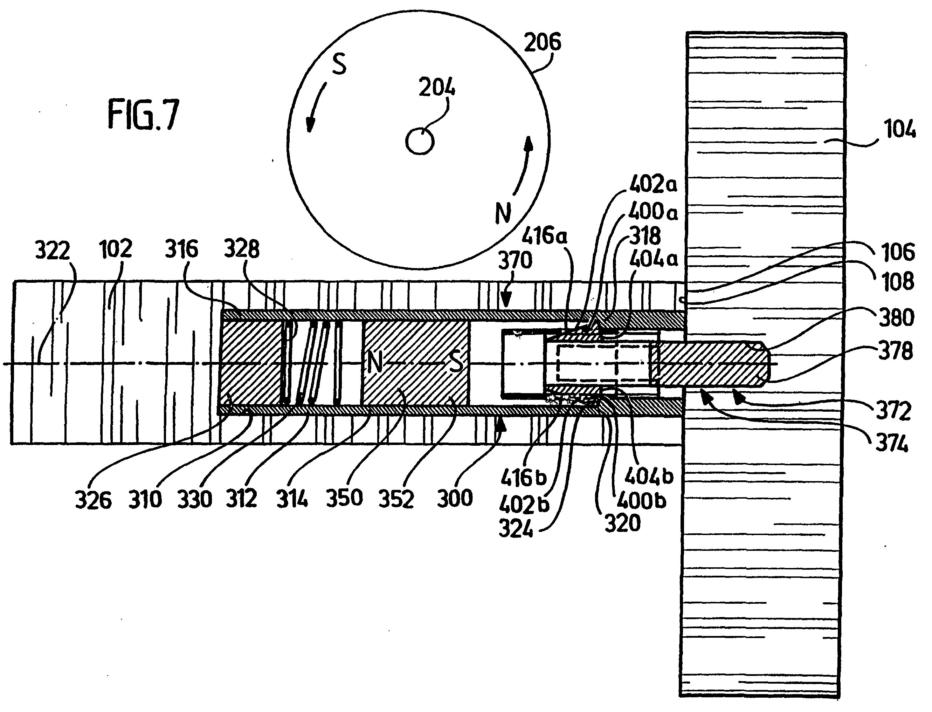

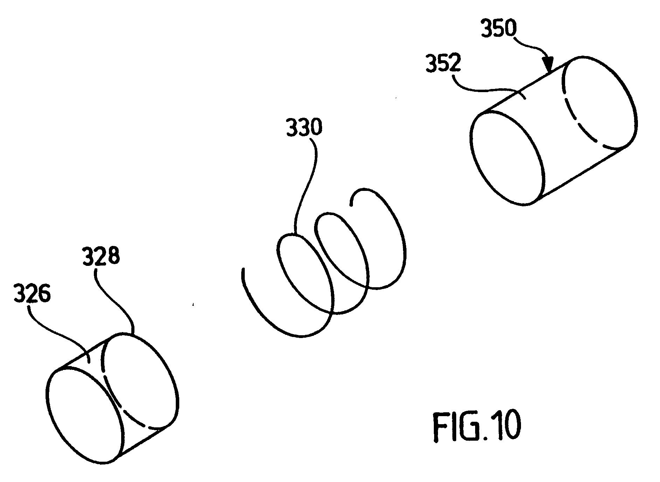

Eine zweite, als Ganzes mit 300 bezeichnete Ausführungsform eines erfindungsgemäßen Verbindungsmittels wird im folgenden unter Bezugnahme auf die Figuren 7 bis 10 erläutert werden.

Wie aus Fig. 7 zu ersehen ist, wird auch die zweite Ausführungsform 300 durch ein erstes Verbindungselement 370 und ein zweites Verbindungselement 372 gebildet, wobei das erste Verbindungselement 370 eine hohlzylindrische Außenhülse 312 umfaßt, welche mittels eines (aus Gründen der Übersichtlichkeit nicht dargestellten) Außengewindes in eine zylindrische Bohrung 310, die auf der Anlagefläche 106 des ersten Bauteils 102 mündet, eingedreht ist.

Die Mantelwand 314 der Außenhülse 312 weist einen dünneren hinteren, d. h. im montierten Zustand der Anlagefläche 106 abgewandten Abschnitt 316 und einen dickeren vorderen, d. h. der Anlagefläche 106 zugewandten Abschnitt 318 auf, wobei der hintere Abschnitt 316 an einem an der Innenseite der Außenhülse 312 ausgebildeten Absatz 320 in den vorderen Abschnitt 318 übergeht.

Eine im montierten Zustand der Anlagefläche 106 abgewandte Rückseite des Absatzes 320 bildet eine ringförmige, unter einem Winkel von beispielsweise 75° gegen die Achse 322 der Außenhülse 312 ausgerichtete Rastfläche 324 der Außenhülse 312.

Ein hinteres, d. h. der Anlagefläche 106 im montierten Zustand abgewandtes Ende der Außenhülse 312 ist mittels eines zylindrischen Verschlußstopfens 326 verschlossen, welcher durch Preßpassung in der Außenhülse 312 festgelegt ist.

An einer im montierten Zustand der Anlagefläche 106 zugewandten Vorderseite 328 des Verschlußstopfens ist ein Ende einer Druck-Schraubenfeder 330 festgelegt, deren weiteres Ende dem Verschlußstopfen 326 abgewandt ist und längs der Achse 322 der Außenhülse 312 verschieblich ist.

Zwischen dem freien Ende der Druck-Schraubenfeder 330 und dem Absatz 320 ist in der Außenhülse 312 ein koaxial zu der Außenhülse 312 ausgerichtetes zylindrisches Magnetelement 350 angeordnet, welches an dem hinteren Abschnitt 316 der Mantelwand 314 der Außenhülse 312 gleitverschieblich geführt ist.

Das Magnetelement 350 umfaßt einen Magnetkörper 352 aus einem parallel zur Achse des Magnetelements 350 und damit zur Achse 322 der Außenhülse 312 magnetisierten Permanentmagnetmaterial (parallele Magnetisierung).

Die vordere und die hintere Stirnfläche des Magnetelements 350 können jeweils mit Schutzkappen aus einem an den Magnetkörper 352 angespritzten Kunststoffmaterial versehen sein.

Das zur Herstellung der Verbindung zwischen den Bauteilen 102 und 104 mit dem ersten Verbindungselement 370 zusammenwirkende zweite Verbindungselement 372 des Verbindungsmittels 300 umfaßt einen Stehbolzen 374, dessen mit einem Außengewinde 376 versehener Schaft 378 in eine auf der Hauptfläche 108 des zweiten Bauteils 104 mündende zylindrische Bohrung 380 eingedreht ist.

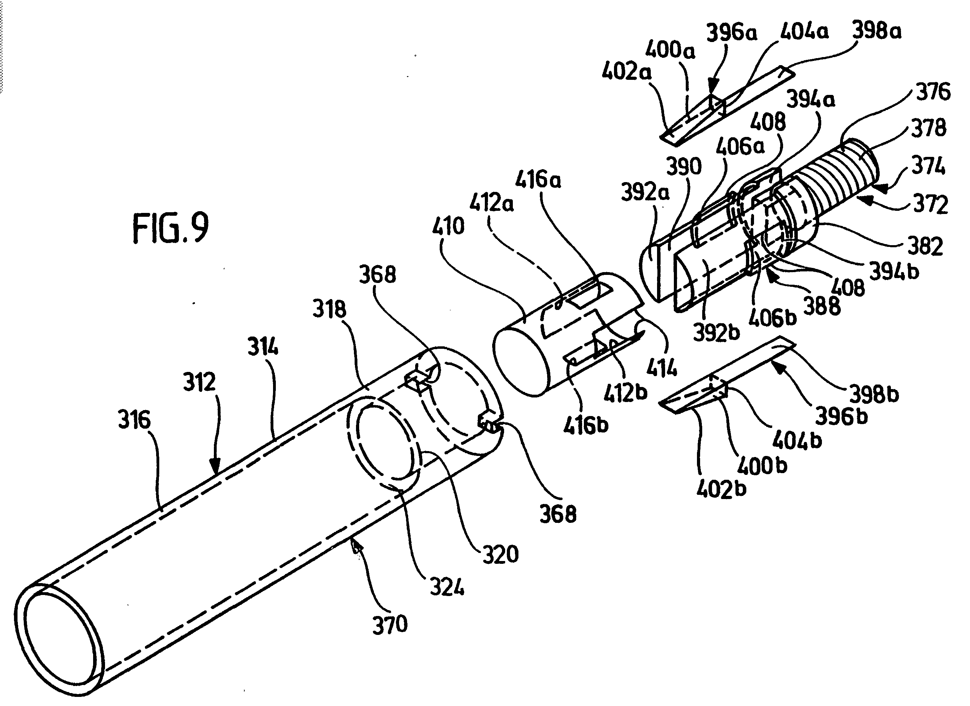

Ferner umfaßt der Stehbolzen 374 einen im wesentlichen zylindrischen Bolzenkopf 382 (siehe Fig. 9), dessen dem Schaft 378 zugewandte Rückseite im montierten Zustand an der Hauptfläche 108 des zweiten Bauteils 104 anliegt.

Von der dem Schaft 378 abgewandten Vorderseite des Bolzenkopfs 382 springt ein zylindrischer, koaxial zu dem Bolzenkopf 382 ausgerichteter Führungszapfen 388 vor, welcher durch einen in radialer Richtung und in Längsrichtung des Führungszapfens 388 durchgehenden Aufnahmeschlitz 390 in zwei Führungszapfenhälften 392a und 392b unterteilt ist.

Mit dem Aufnahmeschlitz 390 in dem Führungszapfen 388 fluchten zwei Ausnehmungen 394a und 394b in dem Bolzenkopf 382, die sich von einander gegenüberliegenden Stellen des Umfangs des Bolzenkopfs 382 aus in radialer Richtung des Bolzenkopfs 382 erstrecken.

An den in radialer Richtung innenliegenden Bodenflächen der Ausnehmungen 394a, 394b ist jeweils ein Rastelement 396a, 396b festgelegt, das ein sich von dem Boden der jeweiligen Ausnehmung 394a, 394b parallel zu der Längsachse des Führungszapfens 388 in den Aufnahmeschlitz 390 hinein erstreckendes Blattfederelement 398a, 398b umfaßt, welches an seinem freien, dem Bolzenkopf 382 abgewandten Ende eine keilförmige Rastzunge 400a bzw. 400b trägt.

Jede der Rastzungen 400a, 400b weist eine dem Bolzenkopf 382 abgewandte Keilfläche 402a, 402b auf, die mit der Außenseite des jeweils zugeordneten Blattfederelements 398a bzw. 398b einen spitzen Winkel von beispielsweise 15° einschließt.

Ferner weist jede der Rastzungen 400a, 400b eine dem Bolzenkopf 382 zugewandte Rastfläche 404a, 404b auf, die mit der Außenseite des jeweils zugeordneten Blattfederelements 398a bzw. 398b einen Winkel einschließt, der im wesentlichen dem Winkel entspricht, den die Rastfläche 324 des Absatzes 320 der Außenhülse 312 mit der Achse 322 der Außenhülse 312 einschließt.

Jede der Führungszapfenhälften 392a, 392b ist mit jeweils einem Führungsvorsprung 406a bzw. 406b versehen, der von der Außenfläche der jeweils zugeordneten Führungszapfenhälfte 392a, 392b aus in radialer Richtung nach außen vorspringt und sich längs des Umfangs der jeweiligen Führungszapfenhälfte 392a, 392b über einen Winkel von beispielsweise ungefähr 60° erstreckt.

Parallel zur Längsachse des Führungszapfens 388 verlaufende seitliche Begrenzungsflächen der Führungsvorsprünge 406a und 406b bilden Führungsflächen 408 zur axialen Führung einer auf den Führungszapfen 388 aufgeschobenen, hohlzylindrischen Entriegelungshülse 410, welche an ihrem dem Bolzenkopf 382 zugewandten Ende mit sich in axialer Richtung erstreckenden Führungsausnehmungen 412a, 412b versehen ist, deren axial verlaufende seitliche Begrenzungsflächen Führungsflächen 414 bilden, die mit den Führungsflächen 408 der Führungsvorsprünge 406a, 406b zur axialen Führung der Entriegelungshülse 410 an dem Führungszapfen 388 zusammenwirken.

Ferner ist die Entriegelungshülse 410 mit in Umfangsrichtung zwischen den Führungsausnehmungen 412a und 412b angeordneten, im folgenden als Fenster 416a und 416b bezeichneten Durchbrüchen versehen, welche mit dem Aufnahmeschlitz 390 des Führungszapfens 388 fluchten, wenn die Entriegelungshülse 410 mit den Führungsflächen 414 an den Führungsflächen 408 des Führungszapfens 388 geführt ist.

Zum Herstellen einer lösbaren Verbindung zwischen den beiden Bauteilen 102 und 104 mittels des Verbindungsmittels 300 wird wie folgt vorgegangen:

Zunächst wird mittels eines geeigneten Bohrgeräts die zylindrische Bohrung 310 in dem ersten Bauteil 102 hergestellt, und die Außenhülse 312 wird mittels eines geeigneten Werkzeugs, beispielsweise eines Schraubendrehers, in die zylindrische Bohrung 310 eingedreht, bis ihr vorderes Ende mit der Anlagefläche 106 bündig ist.

Um das Eindrehen in die zylindrische Bohrung 310 zu ermöglichen oder zu erleichtern, ist die Außenhülse 312 an ihrer vorderen Stirnfläche mit einem radial verlaufenden Schlitz 368 versehen, in den das Werkzeug, beispielsweise der Schraubendreher, eingreifen kann.

Ferner wird mittels eines geeigneten Bohrgeräts die zylindrische Bohrung 380 in dem zweiten Bauteil 104 hergestellt, und der Schaft 378 des Stehbolzens 374 wird mittels eines geeigneten Werkzeugs, beispielsweise eines Schraubendrehers, in die zylindrische Bohrung 380 eingedreht, bis der Bolzenkopf 382 an der Hauptfläche 108 des zweiten Bauteils 104 anliegt.

Das zum Eindrehen des Stehbolzens 374 in die zylindrische Bohrung 380 verwendete Werkzeug kann dabei in den Aufnahmeschlitz 390 des Führungszapfens 388 eingreifen.

Anschließend wird die Entriegelungshülse 410 von der Vorderseite des Führungszapfens 388 her so auf denselben aufgeschoben, daß ihre Führungsflächen 414 mit den Führungsflächen 408 des Führungszapfens 388 zur Anlage kommen.

Beim Aufschieben der Entriegelungshülse 410 auf den Führungszapfen 388 werden die Rastzungen 400a, 400b der Rastelemente 396a bzw. 396b zunächst durch den dem Bolzenkopf 382 zugewandten Bereich der Entriegelungshülse 410 radial nach innen in den Aufnahmeschlitz 390 hineingedrückt, bis die Fenster 416a, 416b der Entriegelungshülse 410 die axiale Position der Rastzungen 400a und 400b erreichen, wodurch sich die Rastzungen 400a, 400b radial nach außen in die in Fig. 7 dargestellte Stellung bewegen können, in der die Rastzungen 400a, 400b in Eingriff mit den Fenstern 416a, 416b der Entriegelungshülse 410 stehen. In dieser Stellung ist ein weiteres Aufschieben der Entriegelungshülse 410 auf den Führungszapfen 388 nur gegen den Widerstand der Blattfederelemente 398a, 398b möglich.

Zur Herstellung der lösbaren Verbindung zwischen den Bauteilen 102 und 104 werden anschließend die Bauteile 102 und 104 so aufeinanderzubewegt, daß der Stehbolzen 374 mit dem Führungszapfen 388 und der darauf aufgeschobenen Entriegelungshülse 410 in den Innenraum der Außenhülse 312 eintaucht. Beim Einschieben dieser Elemente in die Außenhülse 312 werden zunächst die Rastzungen 400a, 400b durch den vorderen Abschnitt 318 der Mantelwand 314 der Außenhülse 312, dessen Innendurchmesser im wesentlichen dem Außendurchmesser der Entriegelungshülse 410 entspricht, radial nach innen in den Aufnahmeschlitz 390 gedrückt, bis die in Fig. 7 dargestellte Endstellung erreicht ist, in der die Anlagefläche 106 des ersten Bauteils 102 an der Hauptfläche 108 des zweiten Bauteils 104 anliegt und die Fenster 416a, 416b in der Entriegelungshülse 410 dem dünneren hinteren Abschnitt 316 der Mantelwand 314 der Außenhülse 312 gegenüberstehen, so daß sich die Rastzungen 400a und 400b wieder durch die Fenster 416a bzw. 416b radial nach außen bewegen können, wodurch die Rastflächen 404a und 404b der Rastelemente 396a bzw. 396b zur Anlage mit der Rastfläche 324 des Absatzes 320 der Außenhülse 312 kommen. Dadurch wird das die Außenhülse 312 umfassende erste Verbindungselement 370 so mit dem den Stehbolzen 374 umfassenden zweiten Verbindungselement 372 verrastet, daß eine Relativbewegung dieser Verbindungselemente längs der Achse 322 der Außenhülse 312 verhindert wird.

In dieser verbundenen Stellung der Bauteile 102 und 104 liegt die Umfangsfläche des Bolzenkopfs 382, dessen Durchmesser im wesentlichen dem Außendurchmesser der Entriegelungshülse 410 entspricht, flächig an dem vorderen Abschnitt 318 der Mantelwand 314 der Außenhülse 312 an, was die Übertragung beträchtlicher Scherkräfte zwischen dem ersten Verbindungselement 370 und dem zweiten Verbindungselement 372 ermöglicht.

Die in der Verbindung der beiden Bauteile 102 und 104 längs der Verbindungsrichtung (Achse 322) auftretenden Zugkräfte werden durch die Verrastung der Rastzungen 400a und 400b mit dem Absatz 320 der Außenhülse 312 übertragen.

Zum Lösen der Verbindung zwischen den Bauteilen 102 und 104 wird das in Fig. 5 dargestellte und bereits vorstehend im Zusammenhang mit der ersten Ausführungsform des erfindungsgemäßen Verbindungsmittels beschriebene Antriebsgerät 192 verwendet.

Dieses Antriebsgerät 192 wird in die in Fig. 7 schematisch dargestellte Stellung relativ zu dem Verbindungsmittel 300 gebracht, in der die Längsachse des Antriebsmagneten 206 im wesentlichen senkrecht zu der Achse 322 der Außenhülse 312 und damit des Magnetelements 350 ausgerichtet ist. Das Gehäuse 194 des Antriebsgeräts 192 ist in Fig. 7 aus Gründen der Übersichtlichkeit nicht dargestellt.

Vorzugsweise wird das Antriebsgerät 192 so positioniert, daß es in Richtung der Achse 322 einen größeren Abstand von dem zweiten Bauteil 104 aufweist als die Druck-Schraubenfeder 330.

Anschließend wird durch Betätigen des Wahlschalters 208 des Antriebsgeräts 192 der Elektromotor 198 in einen solchen Betriebszustand versetzt, in dem sich die Welle 204 des Antriebsmagneten 206 (in der Blickrichtung der Fig. 7 gesehen) im Gegenuhrzeigersinn dreht. Dadurch erzeugt der diametral magnetisierte Antriebsmagnet 206 ein gleichsinnig rotierendes Antriebsmagnetfeld. In Fig. 7 sind der Nordpol (N), der Südpol (S) und die Drehrichtung des Antriebsmagnetfeldes schematisch dargestellt.

Dieses Antriebsmagnetfeld tritt in Wechselwirkung mit dem Magnetelement 350, dessen axial magnetisierter Magnetkörper 352 beispielsweise so magnetisiert ist, daß der Nordpol (N) in der Darstellung der Fig. 7 nach links und der Südpol (S) des Magnetelements 350 in der Darstellung der Fig. 7 nach rechts weist.

Um ein Eindringen des Antriebsmagnetfeldes in den Innenraum der Außenhülse 312 zu ermöglichen, besteht die Außenhülse 312 aus einem nicht-ferromagnetischen Material, beispielsweise aus Messing.

Da das Antriebsmagnetfeld am Ort des der Druck-Schraubenfeder 330 zugewandten Pols des Magnetelements 350 stärker als an dem der Entriegelungshülse 410 zugewandten Pol ist, ist für die Wirkung des Antriebsmagnetfeldes auf das Magnetelement 410 der Einfluß auf den der Druck-Spiralfeder 330 näheren Pol (im Beispiel: auf den Nordpol) des Magnetelements 350 maßgeblich.

In der Stellung der Fig. 7 steht diesem dem Antriebsgerät 192 nähergelegenen Pol des Magnetelements 350 ein gleichnamiger Pol des Antriebsmagneten 206 gegenüber, so daß das Antriebsmagnetfeld das Magnetelement 350 von dem Antriebsmagneten 206 weg zu der Entriegelungshülse 410 hin (in der Darstellung der Fig. 7 nach rechts) beschleunigt.

Beim Auftreffen auf das dem Magnetelement 350 zugewandte Ende der Entriegelungshülse 410 wird der Impuls des Magnetelements 350 zum größten Teil auf die Entriegelungshülse 410 übertragen. Die Entriegelungshülse 410 bewegt sich infolgedessen ein Stück weit auf den Bolzenkopf 382 zu, wobei die Keilflächen 402a und 402b der Rastzungen 400a bzw. 400b durch die diesen Keilflächen 402a bzw. 402b zugewandten Ränder der Fenster 416a bzw. 416b ein Stück weit radial nach innen in den Aufnahmeschlitz 390 des Führungszapfens 388 hineingedrückt werden.

Das durch den Aufprall auf die Entriegelungshülse 410 abgebremste Magnetelement 350 wird durch das Antriebsmagnetfeld von der Entriegelungshülse 410 weg zu der Druck-Schraubenfeder 330 hin beschleunigt, sobald das Antriebsmagnetfeld sich so weit gedreht hat, daß die anziehende Wirkung des Südpols des Antriebsmagneten 206 die abstoßende Wirkung des Nordpols des Antriebsmagneten 206 überwiegt.

Nachdem das schraubenfederseitige Ende des Magnetelements 350 das freie Ende der Druck-Schraubenfeder 330 erreicht hat, wird die Druck-Schraubenfeder 330 durch das Magnetelement 350 zusammengedrückt, wobei die Bewegungsenergie, die das Magnetelement 350 aus dem Antriebsmagnetfeld aufgenommen hat, in elastische Energie der Druck-Schraubenfeder 330 umgewandelt wird.

Nachdem das Magnetelement 350 an einem Umkehrpunkt zur Ruhe gekommen ist, wird es von der Druck-Schraubenfeder 330 wieder in Richtung auf die Entriegelungshülse 410 zu beschleunigt, wobei die elastische Energie der Druck-Schraubenfeder 330 in kinetische Energie des Magnetelements 350 zurückgewandelt wird. Außerdem wird in dieser Phase das Magnetelement 350 zusätzlich durch das Antriebsmagnetfeld beschleunigt, da sich dieses mittlerweile so weitergedreht hat, daß wiederum die einander nächstliegenden Pole des Magnetelements 350 einerseits und des Antriebsmagneten 206 andererseits gleichnamige Pole sind, die sich abstoßen.

Auf die vorstehend beschriebene Weise wird das Magnetelement 350 aufgrund der Wechselwirkung mit dem durch den Antriebsmagneten 206 erzeugten rotierenden Antriebsmagnetfeld im wesentlichen periodisch zwischen der Druck-Schraubenfeder 330 und der Entriegelungshülse 410 linear hin- und herbewegt, wobei das Magnetelement 350 in jeder Periode einmal Impuls auf die Entriegelungshülse 410 überträgt, so daß sich diese Stück um Stück auf den Bolzenkopf 382 zubewegen kann.

Dadurch, daß das Magnetelement 350 vor jedem neuen Auftreffen auf die Entriegelungshülse 410 über eine hinreichend große Wegstrecke hinweg von dem Antriebsmagnetfeld beschleunigt werden kann, entsteht ein schlaghammerartiger Effekt, aufgrund dessen die Entriegelungshülse 410 auch gegen einen großen Widerstand der Blattfederelemente 398a und 398b auf den Bolzenkopf 382 zubewegt werden kann.

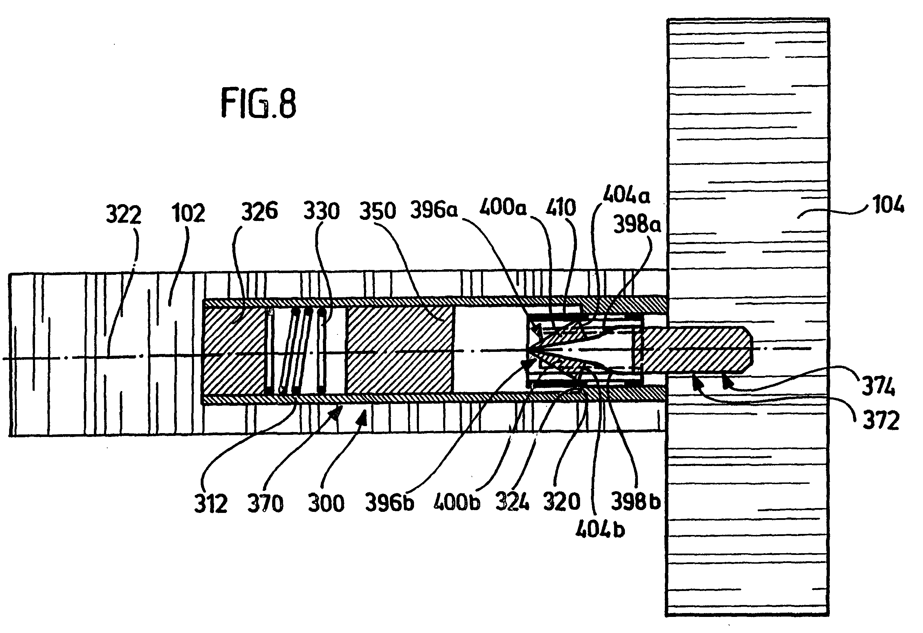

Schließlich ist die Entriegelungshülse 410 so weit auf den Bolzenkopf 382 zubewegt worden, daß die Rastflächen 404a und 404b der Rastzungen 400a bzw. 400b außer Eingriff mit der Rastfläche 324 des Absatzes 320 kommen, wie in Fig. 8 dargestellt.

In dieser Stellung kann die Außenhülse 312 und damit das erste Bauteil 102 ohne weiteres von dem Stehbolzen 374 und damit von dem zweiten Bauteil 104 abgezogen werden, so daß diese Stellung der als Halteteil wirksamen Rastelemente 396a und 396b der Freigabestellung derselben entspricht.

Zum Lösen der Verbindung zwischen den beiden Bauteilen 102 und 104 wird die Drehzahl des Elektromotors 198 und damit die Drehfrequenz des Antriebsmagnetfeldes vorzugsweise so eingestellt, daß der während jeder Periode des hin- und herschwingenden Magnetelements 350 auf dasselbe übertragene Impuls maximal wird.

Ist die Drehfrequenz des Antriebsmagnetfeldes zu niedrig, so wird das Magnetelement 350 nicht hinreichend beschleunigt, um einen großen auf die Entriegelungshülse 410 übertragbaren Impuls zu erhalten.

Ist andererseits die Drehfrequenz des Antriebsmagnetfeldes zu hoch, so führt das Magnetelement 350 lediglich Schwingungen kleiner Amplitude um einen nahe der Entriegelungshülse 410 gelegenen Ruhepunkt aus. In diesem Fall erreicht das Magnetelement 350 während seiner periodischen Bewegung nicht mehr die Druck-Schraubenfeder 330, und für eine ausreichende Beschleunigung des Magnetelements 350 auf die Entriegelungshülse 410 zu steht kein ausreichender Beschleunigungsweg zur Verfügung.

Zwischen den vorstehend genannten Extremen gibt es eine Drehfrequenz des Antriebsmagnetfeldes, die im folgenden als Resonanzfrequenz bezeichnet wird, bei der der von dem Antriebsmagnetfeld auf das Magnetelement 350 übertragbare Impuls maximal wird. In diesem Resonanzfall stimmt die Frequenz der oszillierenden Hin- und Herbewegung des Magnetelements 350 innerhalb der Außenhülse 312 mit der Drehfrequenz des Antriebsmagnetfelds überein.

Da die vorstehend definierte Resonanzfrequenz zum Lösen der zweiten Ausführungsform 300 des erfindungsgemäßen Verbindungsmittels in der Regel nicht mit der Resonanzfrequenz für das Lösen der vorstehend beschriebenen Ausführungsform 100 des erfindungsgemäßen Verbindungsmittels übereinstimmen wird, weist der Wahlschalter 208 des Antriebsgeräts 192 vorzugsweise eine dritte Betriebsstellung auf, der eine Drehzahl des Elektromotors 198 zugeordnet ist, welche der Resonanzfrequenz zum Lösen der zweiten Ausführungsform 300 des erfindungsgemäßen Verbindungsmittels zugeordnet ist. Auf diese Weise ist es möglich, mit ein und demselben Antriebsgerät 192 sowohl mittels der ersten Ausführungsform 100 als auch mittels der zweiten Ausführungsform 300 des erfindungsgemäßen Verbindungsmittels hergestellte Verbindungen zwischen den Bauteilen 102 und 104 zu lösen.

Ferner kann vorgesehen sein, daß das Antriebsgerät 192 noch weitere Betriebszustände mit weiteren Drehzahlen des Elektromotors 198 aufweist, die jeweils voneinander verschiedenen Ausführungsformen der Verbindungsmittel 100 oder 300 zugeordnet sind, welche sich hinsichtlich ihrer jeweiligen Resonanzfrequenzen unterscheiden.

Schließlich kann auch vorgesehen sein, daß die Drehzahl des Elektromotors stufenlos variierbar ist, um beliebige Resonanzfrequenzen einstellen zu können.

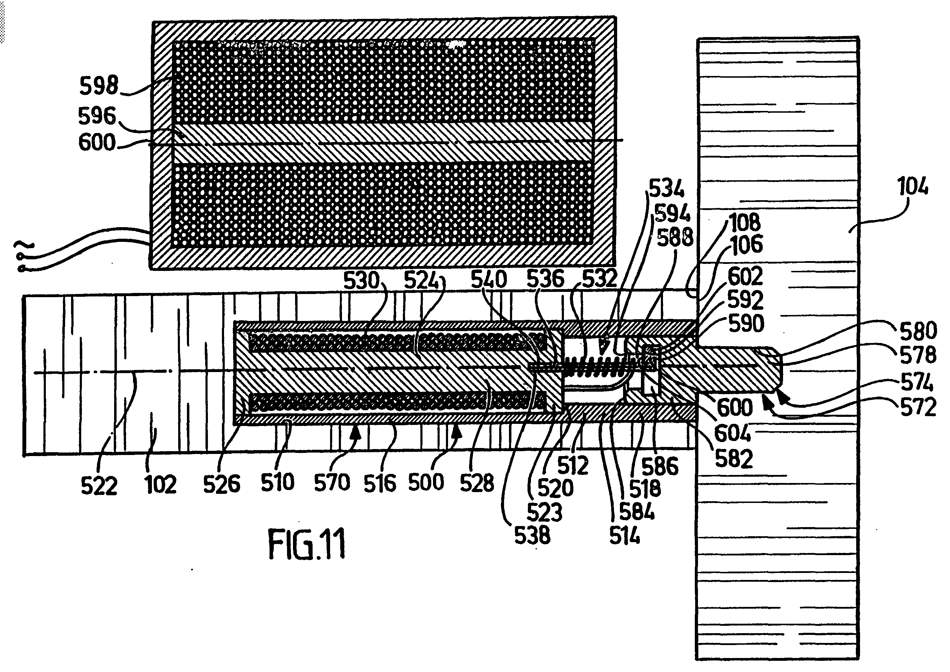

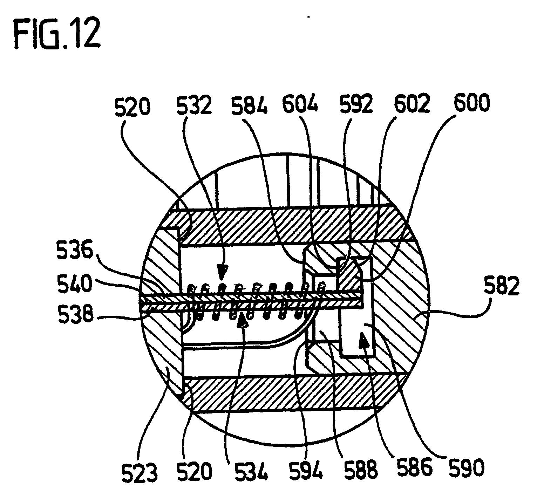

Eine als Ganzes mit 500 bezeichnete dritte Ausführungsform eines erfindungsgemäßen Verbindungsmittels wird nachfolgend unter Bezugnahme auf die Fig. 11 und Fig. 12 beschrieben.

Wie aus Fig. 11 zu ersehen ist, umfaßt ein erstes Verbindungselement 570 des Verbindungsmittels 500 eine mit einem (aus Gründen der Übersichtlichkeit nicht dargestellten) Außengewinde in eine zylindrische Bohrung 510 in dem ersten Bauteil 102 eingedrehte hohlzylindrische Außenhülse 512 aus einem nicht-ferromagnetischen Material, beispielsweise aus Messing.

Die Mantelwand 514 der Außenhülse 512 weist einen dünneren hinteren, das heißt der Anlagefläche 106 des ersten Bauteils 102 im montierten Zustand abgewandten Abschnitt 516 und einem dickeren vorderen, das heißt der Anlagefläche 106 des ersten Bauteils 102 zugewandten vorderen Abschnitt 518 auf.

Den Übergang zwischen dem hinteren Abschnitt 516 und dem vorderen Abschnitt 518 bildet ein stufenförmiger Absatz 520.

An dem Absatz 520 liegt eine vordere Stirnwand 523 eines Eisenkerns 524 an, dessen hintere Stirnwand 526 ein der Anlagefläche 106 des ersten Bauteils 102 abgewandtes Ende der Außenhülse 512 verschließt.

Der Eisenkern 524 ist durch Preßpassung, durch Löten, Schweißen, durch eine Schraubverbindung oder auf eine sonstige geeignete Weise an der Außenhülse 512 festgelegt.

Ein zwischen der vorderen Stirnwand 523 und der hinteren Stirnwand 526 angeordneter zentraler Bereich 528 des Eisenkerns 524, der einen geringeren Durchmesser aufweist als die Stirnwände 523 und 526, ist von den Wicklungen einer Spule 530 aus einem elektrisch gut leitfähigen Material, beispielsweise aus Kupfer, umgeben.

Die beiden Enden des Spulendrahtes sind mit jeweils einem Ende einer Heizwendel 532 verbunden, die ein sich parallel zu der Achse 522 der Außenhülse 512 erstreckendes Thermo-Bimetallelement 534 umgibt (siehe Fig. 12). Das Thermo-Bimetallelement 534 besteht aus einer ersten (in der Darstellung der Fig. 11 und 12 oberen) Schicht 536 aus einem Material mit einem vergleichsweise großen Wärmeausdehnungs-Koeffizienten, und aus einer zweiten (in der Darstellung der Fig. 11 und 12 unteren) zweiten Schicht 538 aus einem Material mit einem vergleichsweise kleinen Wärmeausdehnungs-Koeffizienten.

Beispielsweise kann als Material für die zweite Schicht 538 eine Invar-Legierung (36 Gewichtsprozent Nickel, Rest Eisen) Verwendung finden, während als Material für die erste Schicht 536 eine Eisen-Mangan-Legierung mit Zusätzen von Kupfer und Nickel verwendet werden kann.

Das Thermo-Bimetallelement 534 ist an einem Ende in einem auf der vorderen Stirnwand 523 des Eisenkerns 524 mündenden Sackloch 540 festgelegt.

Ein freies zweites Ende des Thermo-Bimetallelements 534 ist mit einer von der ersten Schicht 536 radial nach außen abstehenden Rastzunge 600 versehen. Die Rastzunge 600 weist eine dem Eisenkern 524 zugewandte Rastfläche 604 und eine dem Eisenkern 524 abgewandte Schräge 602 auf.

Ein zweites Verbindungselement 572 des Verbindungsmittels 500 umfaßt einen Stehbolzen 574, dessen Schaft 578 mittels eines (aus Gründen der Übersichtlichkeit nicht dargestellten) Außengewindes in eine zylindrische Bohrung 580, die auf der Hauptfläche 108 des zweiten Bauteils 104 mündet, eingedreht ist.

Ein im wesentlichen zylindrischer Bolzenkopf 582 des Stehbolzens 574 liegt im montierten Zustand an der Hauptfläche 108 des zweiten Bauteils 104 an.

Auf seiner dem Schaft 578 abgewandten vorderen Stirnseite 584 ist der Bolzenkopf 582 mit einer zu der Längsachse des Stehbolzens 574 koaxialen Ausnehmung 586 versehen, die einen auf der vorderen Stirnseite 584 mündenden Eintrittsabschnitt 588 und einen sich auf der der vorderen Stirnseite 584 abgewandten Seite des Eintrittsabschnitts 588 an denselben anschließenden Aufnahmeabschnitt 590 umfaßt.

Eine ringförmige vordere Begrenzungsfläche des Eintrittsabschnitts 588 dient als Rastfläche 592 des Stehbolzens 574, wie im folgenden noch näher erläutert werden wird.

Zum Herstellen einer lösbaren Verbindung zwischen den beiden Bauteilen 102 und 104 mittels des Verbindungsmittels 500 wird wie folgt vorgegangen:

Mit Hilfe eines geeigneten Bohrgeräts wird die zylindrische Bohrung 510 in dem ersten Bauteil 102 hergestellt. Die Außenhülse 512 wird mittels eines geeigneten Werkzeugs, beispielsweise eines Schraubendrehers, in die zylindrische Bohrung 510 eingedreht, bis eine vordere Stirnfläche der Außenhülse 512 mit der Anlagefläche 106 bündig ist.

Um das Eindrehen der Außenhülse 512 in die zylindrische Bohrung 510 zu erleichtern, ist die Außenhülse 512 an ihrem vorderen Ende mit einem (nicht dargestellten) radial verlaufenden Schlitz versehen, in den das Werkzeug eingreifen kann.

Mit Hilfe eines geeigneten Bohrgeräts wird die zylindrische Bohrung 580 in dem zweiten Bauteil 104 hergestellt, und der Stehbolzen 574 wird mittels eines geeigneten Werkzeugs, beispielsweise eines Schraubendrehers, in die zylindrische Bohrung 580 eingedreht, bis der Bolzenkopf 582 an der Hauptfläche 108 des zweiten Bauteils 104 anliegt.

Um das Eindrehen des Stehbolzens 574 in die zylindrische Bohrung 580 zu erleichtern, weist der Bolzenkopf 582 an seiner vorderen Stirnseite 584 einen (nicht dargestellten) radial verlaufenden Schlitz auf, in den das Werkzeug eingreifen kann.

Zum Herstellen der Verbindung zwischen den beiden Bauteilen 102 und 104 werden dieselben anschließend so relativ zueinander bewegt, daß der Bolzenkopf 582 in den Innenraum der Außenhülse 512 eintaucht. Dann wird das erste Bauteil 102 längs der Achse 522 der Außenhülse 512 weiter auf das zweite Bauteil 104 zubewegt, bis die Schräge 602 an der Vorderseite der Rastzunge 600 an einer an der Vorderseite des Bolzenkopfes 582 ausgebildeten Einlaufschräge 594 anschlägt.

Wird die Außenhülse 512 nun längs ihrer Achse 512 weiter relativ zu dem Stehbolzen 574 (in der Darstellung der Fig. 11 nach rechts) bewegt, so gleitet die Rastzunge 600 längs der Einlaufschräge 594 des Bolzenkopfes 582 radial nach innen, wobei sich das Thermo-Bimetallelement 534 elastisch durchbiegt.

Bei Fortsetzung der Bewegung der Außenhülse 512 relativ zu dem Stehbolzen 574 bleibt die Rastzunge 600 zunächst durch Kontakt mit der Begrenzungswand des Eintrittsabschnitts 588 in dieser gebogenen Stellung, bis die Rastzunge 600 vollständig in den Aufnahmeabschnitt 590 der Ausnehmung 586 eingetreten ist, das Thermo-Bimetallelement 534 in seine entspannte, ungekrümmte Lage zurückkehren kann und die Rastfläche 604 der Rastzunge 600 in Anlage mit der Rastfläche 592 des Aufnahmeabschnitts 590 kommt.

In dieser (in Fig. 11 und 12 dargestellten) Stellung verhindert das Thermo-Bimetallelement 534 durch Verrastung mit dem Bolzenkopf 582 eine Relativbewegung des ersten Verbindungselements 570 und des zweiten Verbindungselements 572 längs der Richtung der Achse 522; das Thermo-Bimetallelement 534 wirkt somit als Halteteil des Verbindungsmittels 500.

Durch den Kontakt zwischen der Rastfläche 592 des Bolzenkopfes 582 einerseits und der Rastfläche 604 des Thermo-Bimetallelements 534 andererseits werden die längs der Verbindungsrichtung (Achse 522) wirkenden Zugkräfte der Verbindung zwischen den Bauteilen 102 und 104 übertragen.

Die Scherkräfte der Verbindung werden durch flächigen Kontakt zwischen der Innenseite des vorderen Abschnitts 518 der Außenhülse 512 einerseits und der Umfangsfläche des Bolzenkopfes 582, dessen Außendurchmesser im wesentlichen dem Innendurchmesser des vorderen Abschnitts 518 entspricht, andererseits übertragen.

Zum Lösen der durch das Verbindungsmittel 500 hergestellten Verbindung zwischen den Bauteilen 102 und 104 wird wie folgt vorgegangen:

Eine mit einem Eisenkern 596 versehene Antriebsspule 598 wird relativ zu dem Verbindungsmittel 500 so positioniert, daß die Spulenachse 600 der Antriebsspule 598 im wesentlichen parallel zu der Achse 522 der Außenhülse 512 ausgerichtet ist.

Dabei wird der Abstand zwischen der Antriebsspule 598 und der innerhalb der Außenhülse 512 angeordneten Spule 530 möglichst gering gehalten.

Darauf wird die Antriebsspule 598 an eine elektrische Wechselspannung angeschlossen, so daß die Antriebsspule 598 ein zeitlich variierendes Antriebsmagnetfeld erzeugt.

Dieses zeitlich variierende Antriebsmagnetfeld erzeugt in der Spule 530 innerhalb der Außenhülse 512 durch Induktion einen elektrischen Wechselstrom, der auch die Heizwendel 532 durchfließt.

Aufgrund ihres Ohmschen Widerstandes erzeugt die Heizwendel 532 Wärme, die sie an das Thermo-Bimetallelement 534 abgibt, so daß sich dessen Temperatur erhöht.

Bei dieser Temperaturerhöhung erfahren die erste Schicht 536 und die zweite Schicht 538 des Thermo-Bimetallelements 534 voneinander verschiedene axiale Längsdehnungen, so daß sich das Thermo-Bimetallelement 534 in der Weise krümmt, daß die Rastzunge 600 außer Eingriff mit der Rastfläche 592 des Aufnahmeabschnitts 590 in dem Bolzenkopf 582 kommt.

In der so erreichten Freigabestellung läßt das als Halteteil wirksame Thermo-Bimetallelement 534 eine Relativbewegung des ersten Verbindungselements 570 und des zweiten Verbindungselements 572 längs der Achse 522 zu; diese Stellung entspricht also der Freigabestellung des Halteteils.

In dieser Freigabestellung können das erste Bauteil 102 und das zweite Bauteil 104 ohne weiteres auseinanderbewegt werden.

Die mit dem Eisenkern 596 versehene Antriebsspule 598 kann auch zum Herstellen der Verbindung zwischen den Bauteilen 102 und 104 mittels des Verbindungsmittels 500 verwendet werden. Dabei wird in der vorstehend beschriebenen Weise vor dem Zusammenführen der Bauteile 102 und 104 ein Induktionsstrom durch die Spule 530 und die Heizwendel 532 erzeugt, so daß sich das Thermo-Bimetallelement 534 erwärmt und radial nach innen krümmt. In dieser gekrümmten Stellung kann das Thermo-Bimetallelement 534 leicht in die Ausnehmung 586 eingeschoben werden. Bei anschließender Abkühlung entkrümmt sich das Thermo-Bimetallelement 534 so, daß die Rastfläche 604 der Rastzunge 600 in Anlage mit der Rastfläche 592 des Aufnahmeabschnitts 590 kommt und das erste Verbindungselement 570 und das zweite Verbindungselement 572 miteinander verrastet sind.

## Patentansprüche

1. Verbindungsmittel zum lösbaren Verbinden eines ersten Bauteils und eines zweiten Bauteils, insbesondere zum lösbaren Verbinden von Möbeloder Maschinenteilen, umfassend
ein im verbundenen Zustand der Bauteile an dem ersten Bauteil angeordnetes erstes Verbindungselement und
ein im verbundenen Zustand der Bauteile an dem zweiten Bauteil angeordnetes zweites Verbindungselement,
wobei das erste Verbindungselement und das zweite Verbindungselement im verbundenen Zustand der Bauteile lösbar miteinander verbunden sind und eines der Verbindungselemente ein Halteteil umfaßt, das in einer Haltestellung so mit dem anderen der Verbindungselemente zusammenwirkt, daß eine Relativbewegung des ersten Verbindungselements und des zweiten Verbindungselements längs einer Verbindungsrichtung verhindert wird, und das in einer Freigabestellung eine Relativbewegung des ersten Verbindungselements und des zweiten Verbindungselements längs der Verbindungsrichtung zuläßt,
**dadurch gekennzeichnet,**
**daß** das Verbindungsmittel (100; 300; 500) ein Kupplungsmittel. (130, 150; 330; 350; 410; 530, 532) umfaßt, das bei Einwirkung eines zeitlich veränderlichen Antriebsmagnetfeldes von außerhalb des Verbindungsmittels (100; 300; 500) mit dem Antriebsmagnetfeld wechselwirkt, und daß durch die Wechselwirkung mit dem Antriebsmagnetfeld das Halteteil (134; 396a, 396b; 534) von der Haltestellung in die Freigabestellung bewegbar ist.

2. Verbindungsmittel nach Anspruch 1, **dadurch gekennzeichnet, daß** das Halteteil (134) mittels eines Antriebsmagnetfeldes von der Freigabestellung in die Haltestellung bewegbar ist.

3. Verbindungsmittel nach einem der Ansprüche 1 oder 2, **dadurch gekennzeichnet, daß** das Halteteil (134; 396a, 396b) mittels eines rotierenden Antriebsmagnetfeldes bewegbar ist.

4. Verbindungsmittel nach einem der Ansprüche 1 oder 2, **dadurch gekennzeichnet, daß** das Halteteil (534) mittels eines Antriebsmagnetfeldes mit zeitlich veränderlicher Amplitude bewegbar ist.

5. Verbindungsmittel nach einem der Ansprüche 1 bis 4, **dadurch gekennzeichnet, daß** das Kupplungsmittel (530, 532) eine Einrichtung (530) zur Erzeugung eines Induktionsstroms durch Wechselwirkung mit dem Antriebsmagnetfeld umfaßt.

6. Verbindungsmittel nach Anspruch 5, **dadurch gekennzeichnet, daß** das Kupplungsmittel (530, 532) ein mit dem Induktionsstrom speisbares Heizelement (532) umfaßt.

7. Verbindungsmittel nach Anspruch 6, **dadurch gekennzeichnet, daß** das Halteteil ein durch Temperaturänderung verformbares Element, vorzugsweise einen Bimetallstreifen (534), umfaßt.

8. Verbindungsmittel nach einem der Ansprüche 1 bis 7, **dadurch gekennzeichnet, daß** das Kupplungsmittel (130, 150; 330, 350, 410) ein Magnetelement (150; 350) umfaßt, das mittels des Antriebsmagnetfeldes zu einer Bewegung innerhalb des Verbindungsmittels (100; 300) antreibbar ist.

9. Verbindungsmittel nach Anspruch 8, **dadurch gekennzeichnet, daß** die Bewegung des Halteteils (134) unmittelbar durch Wechselwirkung des Halteteils (134) mit dem Magnetelement (150) antreibbar ist.

10. Verbindungsmittel nach einem der Ansprüche 8 oder 9, **dadurch gekennzeichnet, daß** das Magnetelement (150) so in dem Verbindungsmittel (100) angeordnet ist, daß es zu einer Drehbewegung antreibbar ist.

11. Verbindungsmittel nach Anspruch 10, **dadurch gekennzeichnet, daß** das Magnetelement (150) so in dem Verbindungselement (100) angeordnet ist, daß es zu einer oszillierenden Drehbewegung antreibbar ist.

12. Verbindungsmittel nach Anspruch 11, **dadurch gekennzeichnet, daß** das Magnetelement (150) so in dem Verbindungsmittel (100) angeordnet ist, daß der von dem Magnetelement (150) bei der oszillierenden Drehbewegung überstreichbare Drehwinkel mehr als ungefähr 90°, vorzugsweise mehr als ungefähr 150°, beträgt.

13. Verbindungsmittel nach einem der Ansprüche 8 bis 12, **dadurch gekennzeichnet, daß** das Magnetelement (150) einen quer zur Längsachse des Magnetelements (150) magnetisierten Permanentmagneten (152) umfaßt.

14. Verbindungsmittel nach einem der Ansprüche 8 oder 10 bis 13, **dadurch gekennzeichnet, daß** das Kupplungsmittel (330, 350, 410) ein Entriegelungselement (410) umfaßt, das durch Wechselwirkung mit dem Magnetelement (350) in eine Entriegelungsstellung bewegbar ist, wobei sich das Halteteil (396a, 396b) in der Freigabestellung befindet, wenn sich das Entriegelungselement (410) in der Entriegelungsstellung befindet.

15. Verbindungsmittel nach einem der Ansprüche 8 bis 14, **dadurch gekennzeichnet, daß** das Magnetelement (350) so in dem Verbindungsmittel (100) angeordnet ist, daß es zu einer linearen Bewegung antreibbar ist.

16. Verbindungsmittel nach Anspruch 15, **dadurch gekennzeichnet, daß** das Magnetelement (350) so in dem Verbindungsmittel (100) angeordnet ist, daß es zu einer linearen Hin- und Herbewegung antreibbar ist.

17. Verbindungsmittel nach einem der Ansprüche 8 bis 16, **dadurch gekennzeichnet, daß** das Magnetelement (350) einen im wesentlichen parallel zur Längsachse des Magnetelements (350) magnetisierten Permanentmagneten (352) umfaßt.

18. Verbindungsmittel nach einem der Ansprüche 8 bis 17, **dadurch gekennzeichnet, daß** das Kupplungsmittel (330, 350, 410) ein elastisches Element (330) zum Umkehren der Bewegungsrichtung des Magnetelements (350) umfaßt.

19. Verbindungsmittel nach einem der Ansprüche 1 bis 18, **dadurch gekennzeichnet, daß** das Halteteil eine Welle (134) mit einem Gewinde, vorzugsweise einem Außengewinde (136), umfaßt.

20. Verbindungsmittel nach einem der Ansprüche 1 bis 19, **dadurch gekennzeichnet, daß** das Halteteil eine Rastzunge (400a, 400b; 600) umfaßt.

21. Verbindungsmittel nach einem der Ansprüche 1 bis 20, **dadurch gekennzeichnet, daß** das Halteteil (134) federnd in einem der Verbindungselemente (170) gelagert ist.

22. Verbindungsmittel nach einem der Ansprüche 1 bis 21, **dadurch gekennzeichnet, daß** die Verbindungselemente (170, 172) so in dem ersten Bauteil (102) bzw. in dem zweiten Bauteil (104) festlegbar sind, daß Außenflächen (106, 108) dieser Bauteile (102, 104) in der verbundenen Stellung aneinander anliegen.

23. Verbindungsmittel nach einem der Ansprüche 1 bis 22, **dadurch gekennzeichnet, daß** eines der Verbindungselemente (170; 370; 570) eine Aufnahme (118; 318; 518) aufweist, in die das andere Verbindungselement (172; 372; 572) in der verbundenen Stellung zumindest teilweise eintaucht.

24. Verbindungsmittel nach Anspruch 23, **dadurch gekennzeichnet, daß** das andere Verbindungselement (172; 372; 572) in der verbundenen Stellung flächig an einer Innenwand der Aufnahme (118; 318; 518) anliegt, wobei die Oberflächennormale der Innenwand quer zu der Verbindungsrichtung (122; 322; 522) ausgerichtet ist.

25. Verbindungsmittel nach einem der Ansprüche 1 bis 24, **dadurch gekennzeichnet, daß** mindestens eines der Verbindungselemente (172; 372; 572) einen Verankerungsteil (178; 378; 578), der im montierten Zustand in dem zugehörigen Bauteil (104) verankert ist, und einen Verbindungsteil (182; 382; 582), der über eine Außenfläche (108) des zugehörigen Bauteils (104) vorsteht, umfaßt und daß der Verbindungsteil (182; 382; 582) in der Verbindungsrichtung (122; 322; 522) eine geringere Ausdehnung aufweist als der Verankerungsteil (178; 378; 578).

26. Antriebsgerät zum Lösen einer mittels eines Verbindungsmittels nach einem der Ansprüche 1 bis 25 hergestellten Verbindung des ersten Bauteils (102) und des zweiten Bauteils (104), umfassend eine Einrichtung (198, 200, 202, 204, 206; 596, 598) zum Erzeugen des zeitlich veränderlichen Antriebsmagnetfeldes, mittels dessen das Halteteil (134; 396a, 396b; 534) von der Haltestellung in die Freigabestellung bewegbar ist.

27. Antriebsgerät nach Anspruch 26, **dadurch gekennzeichnet, daß** das Antriebsgerät (192) eine Einrichtung (198, 200, 202, 204, 206) zum Erzeugen eines rotierenden Antriebsmagnetfeldes umfaßt.

28. Antriebsgerät nach Anspruch 27, **dadurch gekennzeichnet, daß** die Einrichtung (198, 200, 202, 204, 206) zum Erzeugen eines rotierenden Antriebsmagnetfeldes so ausgebildet ist, daß die Drehrichtung des Antriebsmagnetfeldes umkehrbar ist.

29. Antriebsgerät nach einem der Ansprüche 27 oder 28, **dadurch gekennzeichnet, daß** das Antriebsgerät (192) einen drehbaren Antriebsmagneten (206) und einen Motor (198) zum Antreiben einer Drehbewegung des Antriebsmagneten (206) umfaßt.

30. Antriebsgerät nach Anspruch 29, **dadurch gekennzeichnet, daß** der Antriebsmagnet (206) im wesentlichen zylindrisch und quer zu seiner Längsachse magnetisiert ist.

31. Antriebsgerät nach einem der Ansprüche 26 bis 30, **dadurch gekennzeichnet, daß** mittels der Einrichtung (198, 200, 202, 204, 206) zum Erzeugen des Antriebsmagnetfeldes ein periodisch veränderliches Antriebsmagnetfeld erzeugbar ist, dessen Frequenz im wesentlichen einer Resonanzfrequenz eines Kupplungsmittels (130, 150; 330, 350, 410) des Verbindungsmittels (100; 300) entspricht, durch dessen Wechselwirkung mit dem Antriebsmagnetfeld das Halteteil (134; 396a, 396b) bewegbar ist.

32. Antriebsgerät nach Anspruch 31, **dadurch gekennzeichnet, daß** das Antriebsgerät (192) in einen Betriebszustand schaltbar ist, in dem die Frequenz des Antriebsmagnetfeldes gegenüber der Resonanzfrequenz des Kupplungsmittels (130, 150), vorzugsweise um höchstens ungefähr 10%, verschoben ist.

33. Montageset zum Herstellen einer lösbaren Verbindung zwischen einem ersten Bauteil (102) und einem zweiten Bauteil (104), umfassend ein Verbindungsmittel (100; 300; 500) nach einem der Ansprüche 1 bis 25 und ein Antriebsgerät (192; 596, 598) nach einem der Ansprüche 26 bis 32.

34. Verfahren zum Lösen einer Verbindung eines ersten Bauteils, an dem ein erstes Verbindungselement angeordnet ist, und eines zweiten Bauteils, an dem ein zweites Verbindungseiement angeordnet ist,
wobei eines der Verbindungselemente ein Halteteil umfaßt, das in einer Haltestellung so mit dem anderen der Verbindungselemente zusammenwirkt, daß eine Relativbewegung des ersten Verbindungselements und des zweiten Verbindungselements längs einer Verbindungsrichtung verhindert wird, und
wobei das Halteteil zum Lösen der Verbindung von der Haltestellung in eine Freigabestellung bewegt wird, in der das Halteteil eine Relativbewegung des ersten Verbindungselements und des zweiten Verbindungselements längs der Verbindungsrichtung zuläßt,
**dadurch gekennzeichnet, daß** das Halteteil mittels eines von außerhalb des Verbindungsmittels auf das Verbindungsmittel einwirkenden zeitlich veränderlichen Antriebsmagnetfeldes von der Haltestellung in die Freigabestellung bewegt wird.

35. Verfahren nach Anspruch 34, **dadurch gekennzeichnet, daß** das Halteteil zum Herstellen der Verbindung des ersten Bauteils und des zweiten Bauteils vor dem Lösen mittels eines Antriebsmagnetfeldes von der Freigabestellung in die Haltestellung bewegt wird.

36. Verfahren nach einem der Ansprüche 34 oder 35, **dadurch gekennzeichnet, daß** das Halteteil mittels eines rotierenden Antriebsmagnetfeldes bewegt wird.

37. Verfahren nach einem der Ansprüche 34 oder 35, **dadurch gekennzeichnet, daß** das Halteteil mittels eines Antriebsmagnetfeldes mit zeitlich veränderlicher Amplitude bewegt wird.

38. Verfahren nach einem der Ansprüche 34 bis 37, **dadurch gekennzeichnet, daß** das Halteteil unmittelbar durch Wechselwirkung des Halteteils mit dem Antriebsmagnetfeld bewegt wird.

39. Verfahren nach einem der Ansprüche 34 bis 37, **dadurch gekennzeichnet, daß** das Halteteil durch Wechselwirkung des Antriebsmagnetfeldes mit einem Kupplungsmittel bewegt wird.

40. Verfahren nach Anspruch 39, **dadurch gekennzeichnet, daß** durch Wechselwirkung einer Spule des Kupplungsmittels mit dem Antriebsmagnetfeld ein Induktionsstrom erzeugt wird.

41. Verfahren nach Anspruch 40, **dadurch gekennzeichnet, daß** mit dem Induktionsstrom ein Heizelement gespeist wird.

42. Verfahren nach Anspruch 41, **dadurch gekennzeichnet, daß** das Halteteil zumindest teilweise durch Temperaturänderung verformt wird.

43. Verfahren nach Anspruch 39, **dadurch gekennzeichnet, daß** ein Magnetelement mittels des Antriebsmagnetfeldes zu einer Bewegung innerhalb des Verbindungsmittels angetrieben wird.

44. Verfahren nach Anspruch 43, **dadurch gekennzeichnet, daß** die Bewegung des Halteteils unmittelbar durch Wechselwirkung des Halteteils mit dem Magnetelement angetrieben wird.

45. Verfahren nach einem der Ansprüche 43 oder 44, **dadurch gekennzeichnet, daß** das Magnetelement zu einer Drehbewegung angetrieben wird.

46. Verfahren nach Anspruch 45, **dadurch gekennzeichnet, daß** das Magnetelement zu einer oszillierenden Drehbewegung angetrieben wird.

47. Verfahren nach Anspruch 46, **dadurch gekennzeichnet, daß** der von dem Magnetelement bei der oszillierenden Drehbewegung überstrichene Drehwinkel mehr als ungefähr 90°, vorzugsweise mehr als ungefähr 150°, beträgt.

48. Verfahren nach einem der Ansprüche 43 bis 47, **dadurch gekennzeichnet, daß** das Magnetelement durch Wechselwirkung des Antriebsmagnetfeldes mit einem quer zur Längsachse des Magnetelements magnetisierten Permanentmagneten angetrieben wird.

49. Verfahren nach einem der Ansprüche 43 oder 45 bis 48, **dadurch gekennzeichnet, daß** ein Entriegelungselement durch Wechselwirkung mit dem Magnetelement in eine Entriegelungsstellung bewegt wird, wobei sich das Halteteil in der Freigabestellung befindet, wenn sich das Entriegelungselement in der Entriegelungsstellung befindet.

50. Verfahren nach einem der Ansprüche 43 bis 49, **dadurch gekennzeichnet, daß** das Magnetelement zu einer linearen Bewegung angetrieben wird.

51. Verfahren nach Anspruch 50, **dadurch gekennzeichnet, daß** das Magnetelement zu einer linearen Hin- und Herbewegung angetrieben wird.

52. Verfahren nach einem der Ansprüche 43 bis 51, **dadurch gekennzeichnet, daß** das Magnetelement durch Wechselwirkung des Antriebsmagnetfeldes mit einem im wesentlichen parallel zur Längsachse des Magnetelements magnetisierten Permanentmagneten angetrieben wird.

53. Verfahren nach einem der Ansprüche 43 bis 52, **dadurch gekennzeichnet, daß** die Bewegungs-Richtung des Magnetelements mittels eines elastischen Elements umgekehrt wird.

54. Verfahren nach einem der Ansprüche 34 bis 53, **dadurch gekennzeichnet, daß** das Halteteil mittels eines Gewindes, vorzugsweise eines Außengewindes, mit dem anderen Verbindungselement verschraubt wird.

55. Verfahren nach einem der Ansprüche 34 bis 54, **dadurch gekennzeichnet, daß** das Halteteil mittels einer Rastzunge mit dem anderen Verbindungselement verrastet wird.

56. Verfahren nach einem der Ansprüche 34 bis 55, **dadurch gekennzeichnet, daß** das Halteteil federnd in einem der Verbindungselemente gelagert wird.

57. Verfahren nach einem der Ansprüche 34 bis 56, **dadurch gekennzeichnet, daß** die Verbindungselemente so in dem ersten Bauteil bzw. in dem zweiten Bauteil festgelegt werden, daß Außenflächen dieser Bauteile in der verbundenen Stellung aneinander anliegen.

58. Verfahren nach einem der Ansprüche 34 bis 57, **dadurch gekennzeichnet, daß** eines der Verbindungselemente in der verbundenen Stellung in eine Aufnahme des anderen Verbindungselements eintaucht.

59. Verfahren nach Anspruch 58, **dadurch gekennzeichnet, daß** das in die Aufnahme eintauchende Verbindungselement in der verbundenen Stellung flächig an einer Innenwand der Aufnahme anliegt, wobei die Oberflächennormale der Innenwand quer zu der Verbindungsrichtung ausgerichtet ist.

60. Verfahren nach einem der Ansprüche 34 bis 59, **dadurch gekennzeichnet, daß** mindestens eines der Verbindungselemente mittels eines Verankerungsteils in dem zugehörigen Bauteil verankert wird, wobei der Verankerungsteil in der Verbindungsrichtung eine größere Ausdehnung aufweist als ein Verbindungsteil des Verbindungselements, der im montierten Zustand über eine Außenfläche des zugehörigen Bauteils vorsteht.

61. Verfahren nach einem der Ansprüche 34 bis 60, **dadurch gekennzeichnet, daß** das zeitlich veränderliche Antriebsmagnetfeld mittels eines transportablen Antriebsgeräts erzeugt wird.

62. Verfahren nach einem der Ansprüche 34 bis 61, **dadurch gekennzeichnet, daß** ein rotierendes Antriebsmagnetfeld erzeugt wird.

63. Verfahren nach einem der Ansprüche 34 bis 62, **dadurch gekennzeichnet, daß** ein periodisch veränderliches Antriebsmagnetfeld erzeugt wird, dessen Frequenz im wesentlichen einer Resonanzfrequenz eines Kupplungsmittels des Verbindungsmittels entspricht, durch dessen Wechselwirkung mit dem Antriebsmagnetfeld das Halteteil bewegt wird.

## Claims

1. Fastening means for detachably joining a first structural part and a second structural part, in particular for detachably joining furniture or machine parts, comprising
a first fastening element disposed on the first structural part in the joined state of the structural parts and
a second fastening element disposed on the second structural part in the joined state of the structural parts,
wherein the first fastening element and the second fastening element are detachably joined to one another in the joined state of the structural parts and one of the fastening elements comprises a holding part, which in a holding position cooperates with the other fastening element such that a relative movement of the first fastening element and the second fastening element in a joining direction is prevented, and which in a release position permits a relative movement of the first fastening element and the second fastening element in the joining direction,
**characterised in that**
the fastening means (100; 300; 500) comprises a coupling means (130, 150; 330, 350; 410; 530, 532), which, upon action of a time-variable actuating magnetic field from outside the fastening means (100; 300; 500), interacts with the actuating magnetic field, and that through the interaction with the actuating magnetic field, the holding part (134; 396a, 396b; 534) is movable from the holding position into the release position.

2. Fastening means according to Claim 1, **characterised in that** the holding part (134) is movable from the release position into the holding position by means of an actuating magnetic field.

3. Fastening means according to one of Claims 1 or 2, **characterised in that** the holding part (134; 396a, 396b) may be moved by means of a rotating actuating magnetic field.

4. Fastening means according to one of Claims 1 or 2, **characterised in that** the holding part (534) is movable by means of an actuating magnetic field with time-variable amplitude.

5. Fastening means according to one of Claims 1 to 4, **characterised in that** the coupling means (530, 532) comprises a means (530) for generating an induction current by interaction with the actuating magnetic field.

6. Fastening means according to Claim 5, **characterised in that** the coupling means (530, 532) comprises a heating element (532), which may be supplied with the induction current.

7. Fastening means according to Claim 6, **characterised in that** the holding part comprises an element, which may be deformed by temperature change, preferably a bimetallic strip (534).

8. Fastening means according to one of Claims 1 to 7, **characterised in that** the coupling means (130, 150; 330,350,410) comprises a magnetic element (150; 350), which may be actuated to a movement inside the fastening means (100; 300) by means of the actuating magnetic field.

9. Fastening means according to Claim 8, **characterised in that** the movement of the holding part (134) may be actuated directly by interaction of the holding part (134) with the magnetic element (150).

10. Fastening means according to one of Claims 8 or 9, **characterised in that** the magnetic element (150) is disposed in the fastening means (100) such that it may be actuated to a rotational movement.

11. Fastening means according to Claim 10, **characterised in that** the magnetic element (150) is disposed in the fastening means (100) such that it may be actuated to an oscillating rotational movement.

12. Fastening means according to Claim 11, **characterised in that** the magnetic element (150) is disposed in the fastening means (100) such that the angle of rotation, which can be covered by the magnetic element (150) during the oscillating rotational movement, amounts to more than about 90°, preferably more than about 150°.

13. Fastening means according to one of Claims 8 to 12, **characterised in that** the magnetic element (150) comprises a permanent magnet (152), which is magnetised transversely to the longitudinal axis of the magnetic element (150).

14. Fastening means according to one of Claims 8 or 10 to 13, **characterised in that** the coupling means (330, 350, 410) comprises an unlocking element (410), which is movable into an unlocking position by interaction with the magnetic element (350), wherein the holding part (396a, 396b) is located in the release position, when the unlocking element (410) is located in the unlocking position.

15. Fastening means according to one of Claims 8 to 14, **characterised in that** the magnetic element (350) is disposed in the fastening means (100) such that it may be actuated to a linear movement.

16. Fastening means according to Claim 15, **characterised in that** the magnetic element (350) is disposed in the fastening means (100) such that it may be actuated to a linear reciprocating movement.

17. Fastening means according to one of Claims 8 to 16, **characterised in that** the magnetic element (350) comprises a permanent magnet (352), which is magnetised essentially parallel to the longitudinal axis of the magnetic element (350).

18. Fastening means according to one of Claims 8 to 17, **characterised in that** the coupling means (330, 350, 410) comprises an elastic element (330) for reversing the direction of movement of the magnetic element (350).

19. Fastening means according to one of Claims 1 to 18, **characterised in that** the holding part comprises a shaft (134) with a thread, preferably an external thread (136).

20. Fastening means according to one of Claims 1 to 19, **characterised in that** the holding part comprises a catch lug (400a, 400b; 600).

21. Fastening means according to one of Claims 1 to 20, **characterised in that** the holding part (134) is resiliently disposed in one of the fastening elements (170).

22. Fastening means according to one of Claims 1 to 21, **characterised in that** the fastening elements (170, 172) may be fixed in the first structural part (102) or in the second structural part (104) such that outer faces (106, 108) of these structural parts (102, 104) abut one another in the joined position.

23. Fastening means according to one of Claims 1 to 22, **characterised in that** one of the fastening elements (170; 370; 570) has a receiving means (118; 318; 518), into which the other fastening element (172; 372; 572) extends at least partially in the joined position.

24. Fastening means according to Claim 23, **characterised in that** the other fastening element ( 172; 372; 572) abuts flat against an inside wall of the receiving means (118; 318; 518) in the joined position, wherein the surface normal of the inside wall is oriented transversely to the joining direction (122; 322; 522).

25. Fastening means according to one of Claims 1 to 24, **characterised in that** at least one of the fastening elements (172; 372; 572) comprises an anchoring part (178; 378; 578), which in the assembled state is anchored in the associated structural part (104), and a joining part (182; 382; 582), which projects beyond an outside face (108) of the associated structural part (104), and that the joining part (182; 382; 582) has a smaller extent in the joining direction (122; 322; 522) than the anchoring part (178; 378; 578).

26. Actuating device for detaching a join between the first structural part (102) and the second structural part (104) created by means of a fastening means according to one of Claims 1 to 25, comprising a means (198, 200, 202, 204, 206; 596, 598) for generating the time-variable actuating magnetic field, by means of which the holding part (134; 396a, 396b; 534) is movable from the holding position into the release position.

27. Actuating device according to Claim 26, **characterised in that** the actuating device (192) comprises a means (198, 200, 202, 204, 206) for generating a rotating actuating magnetic field.

28. Actuating device according to Claim 27, **characterised in that** the means (198, 200, 202, 204, 206) for generating a rotating actuating magnetic field is configured such that the direction of rotation of the actuating magnetic field is reversible.

29. Actuating device according to one of Claims 27 or 28, **characterised in that** the actuating device (192) comprises a rotatable actuating magnet (206) and a motor (198) for actuating a rotational movement of the actuating magnet (206).

30. Actuating device according to Claim 29, **characterised in that** the actuating magnet (206) is essentially cylindrical and is magnetised transversely to its longitudinal axis.

31. Actuating device according to one of Claims 26 to 30, **characterised in that** by means of the means (198, 200, 202, 204, 206) for generating the time-variable actuating magnetic field a periodically variable actuating magnetic field may be generated, the frequency of which corresponds essentially to a resonance frequency of a coupling means (130, 150; 330, 350, 410) of the fastening means (100; 300), through the interaction of which with the actuating magnetic field the holding part (134; 396a, 396b) is movable.

32. Actuating device according to Claim 31, **characterised in that** the actuating device (192) may be switched into an operating mode, in which the frequency of the actuating magnetic field is shifted in relation to the resonance frequency of the coupling means (130, 150), preferably by about 10% at maximum.

33. Assembly arrangement for creating a detachable join between a first structural part (102) and a second structural part (104), comprising a fastening means (100; 300; 500) according to one of Claims 1 to 25 and an actuating device (192; 596, 598) according to one of Claims 26 to 32.

34. Method of detaching a join between a first structural part, on which a first fastening element is disposed, and a second structural part, on which a second structural part is disposed,
wherein one of the fastening elements comprises a holding part, which in a holding position interacts with the other fastening element such that a relative movement of the first fastening element and the second fastening element in a joining direction is prevented, and
wherein the holding part for detaching the join is moved from the holding position into a release position, in which the holding part permits a relative movement of the first fastening element and the second fastening element in the joining direction,
**characterised in that** the holding part is moved from the holding position into the release position by means of a time-variable actuating magnetic field acting on the fastening means from outside the fastening means.

35. Method according to Claim 34, **characterised in that** the holding part for creating the join between the first structural part and the second structural part is moved prior to detachment from the release position into the holding position by means of an actuating magnetic field.

36. Method according to one of Claims 34 or 35, **characterised in that** the holding part is moved by means of a rotating actuating magnetic field.

37. Method according to one of Claims 34 or 35, **characterised in that** the holding part is moved by means of an actuating magnetic field with time-variable amplitude.

38. Method according to one of Claims 34 to 37, **characterised in that** the holding part is moved directly by interaction of the holding part with the actuating magnetic field.

39. Method according to one of Claims 34 to 37, **characterised in that** the holding part is moved by interaction of the actuating magnetic field with a coupling means.

40. Method according to Claim 39, **characterised in that** an induction current is generated by interaction of a coil of the coupling means with the actuating magnetic field.

41. Method according to Claim 40, **characterised in that** a heating element is supplied with the induction current.

42. Method according to Claim 41, **characterised in that** the holding part is deformed at least partially by temperature change.

43. Method according to Claim 39, **characterised in that** a magnetic element is actuated by means of the actuating magnetic field to a movement inside the fastening means.

44. Method according to Claim 43, **characterised in that** the movement of the holding part is actuated directly by interaction of the holding part with the magnetic element.

45. Method according to one of Claims 43 or 44, **characterised in that** the magnetic element is actuated to a rotational movement.

46. Method according to Claim 45, **characterised in that** the magnetic element is actuated to an oscillating rotational movement.

47. Method according to Claim 46, **characterised in that** the angle of rotation covered by the magnetic element during the oscillating rotational movement amounts to more than about 90°, preferably more than about 150°.

48. Method according to one of Claims 43 to 47, **characterised in that** the magnetic element is actuated by interaction of the actuating magnetic field with a permanent magnet, which is magnetised transversely to the longitudinal axis of the magnetic element.

49. Method according to one of Claims 43 or 45 to 48, **characterised in that** an unlocking element is moved into an unlocking position by interaction with the magnetic element, wherein the holding part is located in the release position, when the unlocking element is located in the unlocking position.

50. Method according to one of Claims 43 to 49, **characterised in that** the magnetic element is actuated to a linear movement.

51. Method according to Claim 50, **characterised in that** the magnetic element is actuated to a linear reciprocating movement.

52. Method according to one of Claims 43 to 51, **characterised in that** the magnetic element is actuated by interaction of the actuating magnetic field with a permanent magnet, which is magnetised essentially parallel to the longitudinal axis of the magnetic element.

53. Method according to one of Claims 43 to 52, **characterised in that** the direction of movement of the magnetic element is reversed by means of an elastic element.

54. Method according to one of Claims 34 to 53, **characterised in that** the holding part is screwed to the other fastening element by means of a thread, preferably an external thread.

55. Method according to one of Claims 34 to 54, **characterised in that** the holding part is locked to the other fastening element by means of a catch lug.

56. Method according to one of Claims 34 to 55, **characterised in that** the holding part is resiliently disposed in one of the fastening elements.

57. Method according to one of Claims 34 to 56, **characterised in that** the fastening elements are fixed in the first structural part or in the second structural part such that outer faces of these structural parts abut one another in the joined position.

58. Method according to one of Claims 34 to 57, **characterised in that** one of the fastening elements extends into a receiving means of the other fastening element in the joined position.

59. Method according to Claim 58, **characterised in that** the fastening element extending into the receiving means abuts flat against an inside wall of the receiving means in the joined position, wherein the surface normal of the inside wall is oriented transversely to the joining direction.

60. Method according to one of Claims 34 to 59, **characterised in that** at least one of the fastening elements is anchored in the associated structural part by means of an anchoring part, wherein the anchoring part has a larger extent in the joining direction than a joining part of the fastening element, which projects beyond an outside face of the associated structural part in the assembled position.

61. Method according to one of Claims 34 to 60, **characterised in that** the time-variable actuating magnetic field is generated by means of a transportable actuating device.

62. Method according to one of Claims 34 to 61, **characterised in that** a rotating actuating magnetic field is generated.

63. Method according to one of Claims 34 to 62, **characterised in that** a periodically variable actuating magnetic field is generated, the frequency of which corresponds essentially to a resonance frequency of a coupling means of the fastening means, through the interaction of which with the actuating magnetic field the holding part is moved.

## Revendications

1. Moyen d'assemblage pour l'assemblage démontable d'un premier élément de structure et d'un second élément de structure, en particulier pour l'assemblage démontable de pièces de meubles ou de machines, comprenant :
- un premier élément d'assemblage disposé, lorsque les éléments de structure sont assemblés, sur le premier élément de structure, et .
- un second élément d'assemblage disposé, lorsque les éléments de structure sont assemblés, sur le second élément de structure,
où le premier élément d'assemblage et le second élément d'assemblage, lorsque les éléments de structure sont assemblés, sont reliés l'un à l'autre de façon démontable, et l'un des éléments d'assemblage comprend une pièce de retenue qui, en position de retenue, agit en coopération avec l'autre élément d'assemblage, de manière telle qu'un mouvement relatif du premier élément d'assemblage et du second élément d'assemblage soit empêché le long d'un sens d'assemblage, et qui, dans une position de libération, permet un mouvement relatif du premier élément d'assemblage et du second élément d'assemblage, le long du sens d'assemblage,
**caractérisé**
**en ce que** le moyen d'assemblage (100 ; 300 ; 500) comprend un moyen d'accouplement (130, 150 ; 330 ; 350 ; 410 ; 530, 532) qui, sous l'effet d'un champ magnétique de commande variant dans le temps, a une interaction, de l'extérieur du moyen d'assemblage (100 ; 300 ; 500), avec le champ magnétique de commande, et en ce que, sous l'effet de l'interaction avec le champ magnétique de commande, la pièce de retenue (134 ; 396a, 396b ; 534) est mobile, passant de la position de retenue à la position de libération.

2. Moyen d'assemblage selon la revendication 1, **caractérisé en ce que** la pièce de retenue (134) est mobile au moyen d'un champ magnétique de commande, passant de la position de libération à la position de retenue.

3. Moyen d'assemblage selon la revendication 1 ou 2, **caractérisé en ce que** la pièce de retenue (134 ; 396a, 396b) est mobile au moyen d'un champ magnétique de commande rotatif.

4. Moyen d'assemblage selon la revendication 1 ou 2, **caractérisé en ce que** la pièce de retenue (534) est mobile au moyen d'un champ magnétique de commande ayant une amplitude variant dans le temps.

5. Moyen d'assemblage selon l'une quelconque des revendications 1 à 4, **caractérisé en ce que** le moyen d'accouplement (530, 532) comprend un dispositif (530) servant à produire un courant d'induction, par interaction avec le champ magnétique de commande.

6. Moyen d'assemblage selon la revendication 5, **caractérisé en ce que** le moyen d'accouplement (530, 532) comprend un élément chauffant (532) alimenté par le courant d'induction.

7. Moyen d'assemblage selon la revendication 6, **caractérisé en ce que** la pièce de retenue comprend un élément, de préférence une lame bimétallique (534), déformable sous l'effet d'un changement de température.

8. Moyen d'assemblage selon l'une quelconque des revendications 1 à 7, **caractérisé en ce que** le moyen d'accouplement (130, 150 ; 330, 350, 410) comprend un élément magnétique (150 ; 350) qui peut être actionné au moyen du champ magnétique de commande, pour déclencher un mouvement à l'intérieur du moyen d'assemblage (100 ; 300).

9. Moyen d'assemblage selon la revendication 8, **caractérisé en ce que** le mouvement de la pièce de retenue (134) peut être déclenché immédiatement sous l'effet de l'interaction de la pièce de retenue (134), avec l'élément magnétique (150).

10. Moyen d'assemblage selon la revendication 8 ou 9, **caractérisé en ce que** l'élément magnétique (150) est disposé dans le moyen d'assemblage (100) de manière telle, qu'il puisse être actionné pour déclencher un mouvement de rotation.

11. Moyen d'assemblage selon la revendication 10, **caractérisé en ce que** l'élément magnétique (150) est disposé dans le moyen d'assemblage (100) de manière telle, qu'il puisse être actionné pour déclencher un mouvement oscillant de rotation.

12. Moyen d'assemblage selon la revendication 11, **caractérisé en ce que** l'élément magnétique (150) est disposé dans le moyen d'assemblage (100) de manière telle, que l'angle de rotation effectué par l'élément magnétique (150), au cours du mouvement oscillant de rotation, soit à peu près égal à plus de 90°, de préférence à peu près égal à plus de 150°.

13. Moyen d'assemblage selon l'une quelconque des revendications 8 à 12, **caractérisé en ce que** l'élément magnétique (150) comprend un aimant permanent (152) magnétisé de façon transversale par rapport à l'axe longitudinal de l'élément magnétique (150).

14. Moyen d'assemblage selon la revendication 8 ou l'une quelconque des revendications 10 à 13, **caractérisé en ce que** le moyen d'accouplement (330, 350, 410) comprend un élément de déverrouillage (410) qui, sous l'effet de l'interaction avec l'élément magnétique (350), peut être déplacé et passer en position de déverrouillage, où la pièce de retenue (396a, 396b) se trouve en position de libération lorsque l'élément de déverrouillage (410) se trouve en position de déverrouillage.

15. Moyen d'assemblage selon l'une quelconque des revendications 8 à 14, **caractérisé en ce que** l'élément magnétique (350) est disposé dans le moyen d'assemblage (100) de manière telle, qu'il puisse être actionné pour déclencher un mouvement linéaire.

16. Moyen d'assemblage selon la revendication 15, **caractérisé en ce que** l'élément magnétique (350) est disposé dans le moyen d'assemblage (100) de manière telle, qu'il puisse être actionné pour déclencher un mouvement linéaire de va-et-vient.

17. Moyen d'assemblage selon l'une quelconque des revendications 8 à 16, **caractérisé en ce que** l'élément magnétique (350) comprend un aimant permanent (352) magnétisé pratiquement de façon parallèle à l'axe longitudinal de l'élément magnétique (350).

18. Moyen d'assemblage selon l'une quelconque des revendications 8 à 17, **caractérisé en ce que** le moyen d'accouplement (330, 350, 410) comprend un élément élastique (330) servant à inverser le sens du mouvement de l'élément magnétique (350).

19. Moyen d'assemblage selon l'une quelconque des revendications 1 à 18, **caractérisé en ce que** la pièce de retenue comprend un axe (134) comportant un filetage, de préférence un filetage extérieur (136).

20. Moyen d'assemblage selon l'une quelconque des revendications 1 à 19, **caractérisé en ce que** la pièce de retenue comprend une languette de verrouillage (400a, 400b ; 600).

21. Moyen d'assemblage selon l'une quelconque des revendications 1 à 20, **caractérisé en ce que** la pièce de retenue (134) est logée de façon élastique dans l'un des éléments d'assemblage (170).

22. Moyen d'assemblage selon l'une quelconque des revendications 1 à 21, **caractérisé en ce que** les éléments d'assemblage (170, 172) peuvent être fixés dans le premier élément de structure (102) ou dans le second élément de structure (104) de manière telle, que des surfaces extérieures (106, 108) de ces éléments de structure (102, 104) soient contiguës entre elles, en position d'assemblage.

23. Moyen d'assemblage selon l'une quelconque des revendications 1 à 22, **caractérisé en ce que** l'un des éléments d'assemblage (170 ; 370 ; 570) présente un logement (118 ; 318 ; 518) dans lequel l'autre élément d'assemblage (172 , 372 ; 572) s'enfonce au moins partiellement, en position d'assemblage.

24. Moyen d'assemblage selon la revendication 23, **caractérisé en ce que** l'autre élément d'assemblage (172 ; 372 ; 572), en position d'assemblage, est contigu, de façon plane, à une paroi intérieure du logement (118 ; 318 ; 518), où la verticale de la surface de la paroi intérieure est orientée de manière transversale par rapport au sens d'assemblage (122 ; 322 ; 522).

25. Moyen d'assemblage selon l'une quelconque des revendications 1 à 24, **caractérisé en ce qu'**au moins l'un des éléments d'assemblage (172 ; 372 ; 572) comprend une pièce d'ancrage (178 ; 378 ; 578) qui, à l'état monté, est ancrée dans l'élément de structure correspondant (104), et comprend une pièce d'assemblage (182 ; 382 ; 582) qui dépasse d'une surface extérieure (108) de l'élément de structure correspondant (104), et **en ce que** la pièce d'assemblage (182 ; 382 ; 582) présente, dans le sens d'assemblage (122 ; 322 ; 522), une plus petite dimension que la pièce d'ancrage (178 ; 378 ; 578).

26. Organe de commande pour le démontage d'un assemblage constitué du premier élément de structure (102) et du second élément de structure (104) et réalisé à l'aide d'un moyen d'assemblage selon l'une quelconque des revendications 1 à 25, comprenant un dispositif (198, 200, 202, 204, 206 ; 596, 598) servant à produire le champ magnétique de commande, variant dans le temps, au moyen duquel la pièce de retenue (134 ; 396a, 396b ; 534) peut être déplacée, passant de la position de retenue à la position de libération.

27. Organe de commande selon la revendication 26, **caractérisé en ce que** l'organe de commande (192) comprend un dispositif (198, 200, 202, 204, 206) servant à produire un champ magnétique de commande rotatif.

28. Organe de commande selon la revendication 27, **caractérisé en ce que** le dispositif (198, 200, 202, 204, 206) servant à produire un champ magnétique de commande rotatif est configuré de manière telle, que le sens de rotation du champ magnétique de commande puisse être inversé.

29. Organe de commande selon la revendication 27 ou 28, **caractérisé en ce que** l'organe de commande (192) comprend un aimant de commande rotatif (206) et un moteur (198) servant à entraîner un mouvement de rotation de l'aimant de commande (206).

30. Organe de commande selon la revendication 29, **caractérisé en ce que** l'aimant de commande (206) est magnétisé pratiquement de manière cylindrique et transversale par rapport à son axe longitudinal.

31. Organe de commande selon l'une quelconque des revendications 26 à 30, **caractérisé en ce qu'**un champ magnétique de commande, variant périodiquement, peut être produit au moyen du dispositif (198, 200, 202, 204, 206) servant à produire le champ magnétique de commande dont la fréquence correspond pratiquement à une fréquence de résonance d'un moyen d'accouplement (130, 150 ; 330, 350, 410) du moyen d'assemblage (100 ; 300), moyen d'accouplement dont l'interaction avec le champ magnétique de commande rend mobile la pièce de retenue (134 ; 396a, 396b).

32. Organe de commande selon la revendication 31, **caractérisé en ce que** l'organe de commande (192) peut être commuté dans un état de fonctionnement au cours duquel la fréquence du champ magnétique de commande est décalée, de préférence, au maximum à peu près de 10 %, par rapport à la fréquence de résonance du moyen d'accouplement (130, 150).

33. Ensemble de montage permettant de réaliser un assemblage démontable entre un premier élément de structure (102) et un second élément de structure (104), comprenant un moyen d'assemblage (100 ; 300 ; 500) selon l'une quelconque des revendications 1 à 25 et un organe de commande (192 ; 596, 598) selon l'une quelconque des revendications 26 à 32.

34. Procédé permettant de démonter un assemblage constitué d'un premier élément de structure sur lequel est disposé un premier élément d'assemblage et d'un second élément de structure sur lequel est disposé un second élément d'assemblage,
où l'un des éléments d'assemblage comprend une pièce de retenue qui, en position de retenue, agit en coopération avec l'autre élément d'assemblage, de manière telle qu'un mouvement relatif du premier élément d'assemblage et du second élément d'assemblage soit empêché le long d'un sens d'assemblage, et
où, pour le démontage de l'assemblage, la pièce de retenue est déplacée, passant de la position de retenue à la position de libération dans laquelle la pièce de retenue permet un mouvement relatif du premier élément d'assemblage et du second élément d'assemblage, le long du sens d'assemblage,
**caractérisé en ce que** la pièce de retenue, au moyen d'un champ magnétique de commande variant dans le temps et agissant, de l'extérieur du moyen d'assemblage, sur le moyen d'assemblage, est déplacée, passant de la position de retenue à la position de libération.

35. Procédé selon la revendication 34, **caractérisé en ce que** la pièce de retenue servant à la réalisation de l'assemblage du premier élément de structure et du second élément de structure, est, avant le démontage, déplacée au moyen d'un champ magnétique de commande, passant de la position de libération à la position de retenue.

36. Procédé selon la revendication 34 ou 35, **caractérisé en ce que** la pièce de retenue est déplacée au moyen d'un champ magnétique de commande rotatif.

37. Procédé selon la revendication 34 ou 35, **caractérisé en ce que** la pièce de retenue est déplacée au moyen d'un champ magnétique de commande ayant une amplitude variant dans le temps.

38. Procédé selon l'une quelconque des revendications 34 à 37, **caractérisé en ce que** la pièce de retenue est déplacée immédiatement sous l'effet de l'interaction de la pièce de retenue, avec le champ magnétique de commande.

39. Procédé selon l'une quelconque des revendications 34 à 37, **caractérisé en ce que** la pièce de retenue est déplacée sous l'effet de l'interaction du champ magnétique de commande, avec un moyen d'accouplement.

40. Procédé selon la revendication 39, **caractérisé en ce qu'**un courant d'induction est produit sous l'effet de l'interaction d'une bobine du moyen d'accouplement, avec le champ magnétique de commande.

41. Procédé selon la revendication 40, **caractérisé en ce qu'**un élément chauffant est alimenté par le courant d'induction.

42. Procédé selon la revendication 41, **caractérisé en ce que** la pièce de retenue est déformée, au moins partiellement, sous l'effet d'un changement de température.

43. Procédé selon la revendication 39, **caractérisé en ce qu'**un élément magnétique est entraîné au moyen du champ magnétique de commande, déclenchant un mouvement à l'intérieur du moyen d'assemblage.

44. Procédé selon la revendication 43, **caractérisé en ce que** le mouvement de la pièce de retenue est déclenché immédiatement sous l'effet de l'interaction de la pièce de retenue, avec l'élément magnétique.

45. Procédé selon la revendication 43 ou 44, **caractérisé en ce que** l'élément magnétique est commandé pour déclencher un mouvement de rotation.

46. Procédé selon la revendication 45, **caractérisé en ce que** l'élément magnétique est commandé pour déclencher un mouvement oscillant de rotation.

47. Procédé selon la revendication 46, **caractérisé en ce que** l'angle de rotation effectué par l'élément magnétique, au cours du mouvement oscillant de rotation, est à peu près égal à plus de 90°, de préférence à peu près égal à plus de 150°.

48. Procédé selon l'une quelconque des revendications 43 à 47, **caractérisé en ce que** l'élément magnétique est commandé sous l'effet de l'interaction du champ magnétique de commande, avec un aimant permanent magnétisé de façon transversale par rapport à l'axe longitudinal de l'élément magnétique.

49. Procédé selon la revendication 43 ou l'une quelconque des revendications 45 à 48, **caractérisé en ce qu'**un élément de déverrouillage, sous l'effet de l'interaction avec l'élément magnétique, est déplacé, passant en position de déverrouillage, où la pièce de retenue se trouve en position de libération lorsque l'élément de déverrouillage se trouve en position de déverrouillage.

50. Procédé selon l'une quelconque des revendications 43 à 49, **caractérisé en ce que** l'élément magnétique est commandé pour déclencher un mouvement linéaire.

51. Procédé selon la revendication 50, **caractérisé en ce que** l'élément magnétique est commandé pour déclencher un mouvement linéaire de va-et-vient.

52. Procédé selon l'une quelconque des revendications 43 à 51, **caractérisé en ce que** l'élément magnétique est commandé sous l'effet de l'interaction du champ magnétique de commande, avec un aimant permanent magnétisé pratiquement de façon parallèle à l'axe longitudinal de l'élément magnétique.

53. Procédé selon l'une quelconque des revendications 43 à 52, **caractérisé en ce que** le sens du mouvement de l'élément magnétique est inversé au moyen d'un élément élastique.

54. Procédé selon l'une quelconque des revendications 34 à 53, **caractérisé en ce que** la pièce de retenue est vissée avec l'autre élément d'assemblage, au moyen d'un filetage, de préférence au moyen d'un filetage extérieur.

55. Procédé selon l'une quelconque des revendications 34 à 54, **caractérisé en ce que** la pièce de retenue est verrouillée avec l'autre élément d'assemblage, au moyen d'une languette de verrouillage.

56. Procédé selon l'une quelconque des revendications 34 à 55, **caractérisé en ce que** la pièce de retenue est logée de façon élastique dans l'un des éléments d'assemblage.

57. Procédé selon l'une quelconque des revendications 34 à 56, **caractérisé en ce que** les éléments d'assemblage sont fixés dans le premier élément de structure ou dans le second élément de structure, de manière telle que des surfaces extérieures de ces éléments de structure, en position d'assemblage, soient contiguës entre elles.

58. Procédé selon l'une quelconque des revendications 34 à 57, **caractérisé en ce que** l'un des éléments d'assemblage, en position d'assemblage, s'enfonce dans un logement de l'autre élément d'assemblage.

59. Procédé selon la revendication 58, **caractérisé en ce que** l'élément d'assemblage s'enfonçant dans le logement est, en position d'assemblage, contigu, de façon plane, à une paroi intérieure du logement, où la verticale de la surface de la paroi intérieure est orientée de façon transversale par rapport au sens d'assemblage.

60. Procédé selon l'une quelconque des revendications 34 à 59, **caractérisé en ce qu'**au moins l'un des éléments d'assemblage est ancré dans l'élément de structure correspondant, au moyen d'une pièce d'ancrage, où la pièce d'ancrage présente, dans le sens d'assemblage, une plus grande dimension qu'une pièce de l'élément d'assemblage qui, à l'état monté, dépasse d'une surface extérieure de l'élément de structure correspondant.

61. Procédé selon l'une quelconque des revendications 34 à 60, **caractérisé en ce que** le champ magnétique de commande, variant dans le temps, est produit au moyen d'un organe de commande transportable.

62. Procédé selon l'une quelconque des revendications 34 à 61, **caractérisé en ce qu'**un champ magnétique de commande rotatif est produit.

63. Procédé selon l'une quelconque des revendications 34 à 62, **caractérisé en ce qu'**un champ magnétique de commande, variant périodiquement, est produit, dont la fréquence correspond pratiquement à une fréquence de résonance d'un moyen d'accouplement du moyen d'assemblage, moyen d'accouplement dont l'interaction avec le champ magnétique de commande fait que la pièce de retenue est déplacée.
